# EUROPÄISCHE PATENTSCHRIFT

(11) **EP 3 173 651 B1**
(45) Veröffentlichungstag und Bekanntmachung des Hinweises auf die Patenterteilung: **06.11.2019**
(21) Anmeldenummer: 16199844.8
(22) Anmeldetag: 16.09.2013
(51) Int. Cl.: F16D 65/56, F16D 55/2255, F16D 66/00

(54) **NACHSTELLEINRICHTUNG EINER SCHEIBENBREMSE, UND EINE ENTSPRECHENDE SCHEIBENBREMSE**
ADJUSTMENT DEVICE OF A DISC BRAKE, AND A CORRESPONDING DISC BRAKE
DISPOSITIF DE RÉGLAGE D'UN FREIN À DISQUE ET FREIN À DISQUE CORRESPONDANT

(30) Priorität: 17.09.2012 DE 102012108672
(43) Veröffentlichungstag der Anmeldung: 31.05.2017
(62) Teilanmeldung aus: 13762141.3
(73) Patentinhaber: KNORR-BREMSE Systeme für Nutzfahrzeuge GmbH, 80809 München (DE)
(72) Erfinder: BRANDL, Christian, 94447 Plattling (DE); PESCHEL, Michael, 82296 Schöngeising (DE); KLINGNER, Matthias, 82272 Moorenweis (DE); ASEN, Alexander, 94428 Eichendorf (DE); STÖGER, Christian, 94486 Osterhofen (DE); RGUICHI, Abdelaziz, 82140 Olching (DE)

(56) Entgegenhaltungen:
- EP-A1- 2 151 597
- DE-A1-102004 037 771
- DE-B3-102008 037 775
- US-A1- 2011 147 138

## Beschreibung

Die Erfindung betrifft eine Nachstelleinrichtung einer Scheibenbremse, insbesondere für ein Kraftfahrzeug, nach dem Oberbegriff des Anspruchs 1. Die Erfindung bezieht sich auf eine entsprechende Scheibenbremse.

Fahrzeuge und bestimmte technische Geräte verwenden häufig Reibungsbremsen, um kinetische Energie umzuwandeln. Bevorzugt wird dabei speziell im Personenkraftwagen- und im Nutzfahrzeugbereich die Scheibenbremse. Bei der typischen Bauform einer Scheibenbremse besteht diese aus einem Bremssattel samt innerer Mechanik, aus in der Regel zwei Bremsbelägen und der Bremsscheibe. Auf die innere Mechanik werden über einen pneumatisch betätigten Zylinder die Zylinderkräfte eingeleitet, durch einen Exzentermechanismus verstärkt und als Zuspannkraft über Gewindespindeln auf Bremsbeläge und Bremsscheibe übertragen, wobei über die Gewindespindeln der Verschleiß von Bremsscheibe und Bremsbelägen ausgeglichen wird.

Die Zuspannkräfte wirken über beide Bremsbeläge auf die Bremsscheibe. Da die Beläge konstruktiv als Verschleißteile ausgelegt werden, sind diese generell weicher als die Bremsscheibe, d.h. die Beläge erfahren über Ihre Gebrauchsdauer eine Änderung der Belagstärke, sie verschleißen. Auch die Bremsscheibe kann verschleißten. Aus diesem Verschleiß ergibt sich die Notwendigkeit, dass eine Verschleißnachstellung die Änderung durch den Verschleiß ausgleicht und somit ein konstantes Luftspiel einstellt. Ein konstantes Luftspiel wird benötigt, um die Ansprechzeiten der Bremse klein zuhalten, die Freigängigkeit der Bremsscheibe zu gewährleisten und eine Hubreserve für Grenzbelastungsfälle vorzuhalten.

Ein Beispiel einer Verschleißnachstellvorrichtung beschreibt das Dokument DE 10 2004 037 771 A1. Dabei wird eine Antriebsdrehbewegung z.B. von einer Drehmoment-Begrenzungseinrichtung, beispielsweise mit einer Kugelrampe, über eine kontinuierlich wirkende Kupplung (Rutschkupplung) auf eine Verstellspindel eines Druckstempels weitergeleitet. Das Luftspiel wird dabei kontinuierlich eingestellt.

Bei mechanischen Nachstelleinrichtungen ist eine Nachstellgeschwindigkeit von der Übersetzung des Nachstellerantriebs abhängig. Aus Bauraumgründen ist jedoch eine große Übersetzung nicht immer möglich.

Es besteht ein ständiger Bedarf in der Fahrzeugtechnik, Gewicht und Kosten, z.B. bei Montage und Wartung, einzusparen, wobei gleichzeitig eine Einsparung an Energie, d.h. Kraftstoff, erfolgen soll.

Die Aufgabe der vorliegenden Erfindung besteht darin, eine verbesserte Nachstelleinrichtung zu schaffen.

Eine weitere Aufgabe ist, eine verbesserte Scheibenbremse bereitzustellen.

Die Aufgabe wird durch eine Nachstelleinrichtung mit den Merkmalen des Anspruchs 1, und eine Scheibenbremse mit den Merkmalen des Anspruchs 13 gelöst.

Es wird eine Nachstellvorrichtung geschaffen, welche einen kompakten Aufbau radial um einen Gewindestempel herum bietet. Nahezu alle ihre Funktionsbauteile umschließen den Gewindestempel mindestens zu einem Teil. Ein Austausch der Nachstelleinrichtung bei Wartung und Reparatur ist gegenüber dem Stand der Technik erleichtert.

Eine erfindungsgemäße Nachstelleinrichtung zur Nachstellung eines Reibflächenverschleißes an Bremsbelägen und Bremsscheibe einer Scheibenbremse, insbesondere für ein Kraftfahrzeug, mit einer Zuspannvorrichtung, vorzugsweise mit einem Bremsdrehhebel, wobei die Nachstelleinrichtung antriebsseitig mit der Zuspannvorrichtung, vorzugsweise mit dem Bremsdrehhebel, und abtriebsseitig mit einer Spindeleinheit der Scheibenbremse koppelbar ist, umfasst a) ein Antriebselement, an dem axial beiderseits jeweils eine Wälzkörperanordnung angeordnet ist, von denen eine als Wälzlager und eine als Kugelrampenkupplung mit einem Freilauf ausgebildet ist; b) ein mit der Kugelrampenkupplung gekoppeltes Druckelement, welches mit einem Abschnitt der Kugelrampenkupplung eine Überlastkupplung bildet; c) ein mit dem Druckelement gekoppeltes Abtriebselement zur Kopplung mit einem Koppelrad, welches für eine Kopplung mit der Spindeleinheit ausgebildet ist; d) ein Kraftspeicherelement zur Erzeugung einer Vorspannkraft der Kugelrampenkupplung und der Überlastkupplung; und e) einen Tragkörper, welcher an einem Ende mit einer Lagerscheibe verbunden ist und um welchen herum axial in Reihe mit der Lagerscheibe das Antriebselement, die Wälzkörperanordnungen, die Überlastkupplung, das Abtriebselement und das Kraftspeicherelement angeordnet sind, wobei das Kraftspeicherelement zwischen einem Auflageabschnitt des Tragkörpers und dem Druckelement angeordnet ist.

Erfindungsgemäß ist der Tragkörper in Hülsengestalt ausgebildet, wobei das Innere des Tragkörpers für eine Aufnahme eines Gewindestempels einer Spindeleinheit der zuzuordnenden Scheibenbremse ausgestaltet ist. Die Hülsengestalt ergibt eine Gewichts- und Werkstoffersparnis und außerdem die Möglichkeit, die Nachstelleinrichtung auf den Gewindestempel aufzusetzen.

Es ergibt sich eine raumsparende, kompakte und leicht austauschbare Nachstelleinrichtung.

Eine erfindungsgemäße Scheibenbremse, vorzugsweise druckluftbetätigt, insbesondere für ein Kraftfahrzeug, mit einer Zuspannvorrichtung, vorzugsweise mit einem Bremsdrehhebel, mindestens einer Spindeleinheit mit jeweils einem Gewindestempel, und mindestens einer Verschleißnachstellvorrichtung, welche mit der Zuspannvorrichtung, vorzugsweise mit dem Bremsdrehhebel, gekoppelt ist, ist so gestaltet, dass die Verschleißnachstellvorrichtung die oben erläuterte Nachstelleinrichtung aufweist.

Weitere vorteilhafte Ausgestaltungen sind in den Unteransprüchen angegeben.

Es ist vorgesehen, dass der Tragkörper einen Lagerabschnitt und einen Aufnahmeabschnitt aufweist, welche über eine Schulter verbunden sind, wobei der Lagerabschnitt einen geringeren Außendurchmesser als der Aufnahmeabschnitt aufweist. Dadurch ist es möglich, einen weitestgehend gleichmäßigen Außendurchmesser der Nachstelleinrichtung ohne große Abweichungen zu erhalten.

In weiterer Ausgestaltung ist vorgesehen, dass ein anderes Ende des Aufnahmeabschnitts als Auflageabschnitt für das Kraftspeicherelement ausgebildet ist. Aufgrund der Hülsengestalt lässt sich eine einfache Fertigung des Tragkörpers gestalten, wobei der Auflageabschnitt auch in einem Herstellgang erstellt werden kann.

Es ist weiterhin vorgesehen, dass auch das Abtriebselement in Hülsengestalt mit zwei zylindrischen Abschnitten ausgebildet ist, die sich ebenfalls leicht durch Umformung ohne zusätzliche spanende Bearbeitung anfertigen lassen. Außerdem ist vorgesehen, dass die zwei zylindrischen Abschnitte des Abtriebselementes unterschiedliche Durchmesser aufweisen und über einen Schulterabschnitt verbunden sind, wobei der eine zylindrische Abschnitt als Abtriebskopplungsabschnitt einen größeren Durchmesser aufweist als der andere zylindrische Abschnitt, der als Abtriebsabschnitt zur Kopplung mit dem Koppelrad ausgebildet ist. Somit ist es möglich, dass das Kraftspeicherelement zwischen dem Abtriebskopplungsabschnitt des Abtriebselementes und dem Tragkörper angeordnet ist. Gleichzeitig ermöglich die Ausgestaltung des Abtriebselementes eine Abdeckung und Schutz vor Verunreinigungen.

In einer noch weiteren Ausführung erstreckt sich der Abtriebsabschnitt des Abtriebselementes in einen Innenraum des Koppelrads steht und mit einem Innenprofil des Koppelrads über Übertragungselemente, vorzugsweise Kugeln, in Zusammenwirkung. Auf diese Weise ist ein einfaches Einstecken in und Herausziehen aus dem Koppelrad für Montage, Wartung und Austausch schnell möglich. Da das Koppelrad in weiterer Ausgestaltung auch gleichzeitig die Funktion eines Synchronrads einer Synchroneinrichtung beinhaltet, ist für die Montage-, Wartungs- und Austauscharbeiten keine Demontage der Synchroneinrichtung notwendig, was Zeit und Kosten einspart. Damit wird eine Entkopplung der Nachstelleinrichtung von der Synchroneinrichtung erreicht.

In einer weiteren Ausführung bilden der Abtriebsabschnitt des Abtriebselementes, das Innenprofil des Koppelrads und die Übertragungselemente ein kardanisches Gelenk. Daraus ergibt sich der Vorteil, dass hiermit Schwenk- und Vertikalbewegungen einer Traverse, in welcher die Gewindestempel eingeschraubt sind, ausgeglichen werden können.

Außerdem ist das Koppelrad in noch weiterer Ausgestaltung mit einem Eingriffsabschnitt versehen, der zur drehfesten Zusammenwirkung mit einem Gewindestempel einer Spindeleinheit der zuzuordnenden Scheibenbremse vorgesehen ist. Der Eingriffsabschnitt kann z.B. Nocken aufweisen, die mit Axialnuten des zugehörigen Gewindestempels zusammenwirken. Damit ist nicht nur eine einfache Montage und Demontage gewährleistet, sondern auch eine relative axiale Verschiebbarkeit zwischen Koppelrad und Gewindestempel ermöglicht.

Wenn das Koppelrad in einer anderen Ausführung einen Synchronabschnitt aufweist, welcher zur Kopplung mit einem Synchronmittel einer Synchroneinrichtung der zuzuordnenden Scheibenbremse vorgesehen ist, ergibt sich Vorteil einer großen Funktionalität des Koppelrades. Der Synchronabschnitt kann z.B. eine Kettenverzahnung sein, und das Synchronmittel eine Kette.

In einer anderen Ausführung weist das Antriebselement einen Konturabschnitt auf, der zur Zusammenwirkung mit einer Betätigungskontur eines Betätigers der Zuspannvorrichtung, vorzugsweise eines Bremsdrehhebels der zuzuordnenden Scheibenbremse ausgebildet ist. Beispielsweise kann der Konturabschnitt eine Verzahnung sein, die umlaufend gestaltet ist, so dass eine einfache Ausrichtung zwischen Betätiger und Antriebselement ermöglicht wird.

In weiterer Ausführung ist vorgesehen, dass ein Rampenring der Kugelrampenkupplung und das Antriebselement mittels eines elastischen Kopplungselementes 14, beispielsweise eine Schlingfeder, gekoppelt sind. Auf diese Weise können die Rampenkugeln in den Kugelrampen der Kugelrampenkupplung in einer bestimmten Position stehen bzw. in eine solche gestellt werden. Außerdem kann somit eine Spielverringerung des Freilaufs ermöglicht werden.

In einer Ausführung der erfindungsgemäßen Scheibenbremse ist vorgesehen, dass die Nachstelleinrichtung der Verschleißnachstellvorrichtung auf den Gewindestempel der mindestens einen Spindeleinheit der Scheibenbremse aufgesetzt ist und den Gewindestempel mindestens teilweise umschließt. Bei neuen Bremsbelägen umschließt die Nachstelleinrichtung den Gewindestempel mindestens zu zwei Drittel der axialen Länge des Gewindestempels. Ein Vorteil dabei, dass ein kompakter Aufbau ermöglicht wird.

Eine Scheibenbremse weist weiterhin mindestens zwei Spindeleinheiten mit jeweils einem Gewindestempel, wobei die Gewindestempel in einer Traverse eingeschraubt sind, wobei die Traverse mit der Zuspannvorrichtung, vorzugsweise mit dem Bremsdrehhebel, zusammenwirkt, und eine Synchroneinrichtung auf. Die Verschleißnachstellvorrichtung weist weiterhin eine Mitnehmereinheit auf, welche mit dem Gewindestempel der anderen Spindeleinheit der beiden Spindeleinheiten der Scheibenbremse gekoppelt ist.

In einer Ausführung ist die Synchroneinrichtung auf der Traverse angeordnet ist. Die damit innerhalb des Sattelgehäuses liegende Synchroneinrichtung kann zu einer verkürzten Bauweise des Bremssattels führen. Außerdem wird kein Deckel für die Synchroneinrichtung benötigt. Dadurch können für beide Öffnungen im Bremssattelgehäuse, die für die Nachstelleinrichtung und die Mitnehmereinrichtung dienen, Deckel mit radialem Abdichtkonzept verwendet werden, was eine Abdichtung vereinfacht.

Außerdem stehen durch den Entfall eines Deckels für die Synchroneinrichtung für den Zylinderflansch eines Pneumatikzylinders mehr Variationsmöglichkeiten offen.

In einer noch weiteren Ausführung weist die Synchroneinrichtung Koppelräder, von denen jeweils eins mit dem jeweiligen Gewindestempel einer der mindestens zwei Spindeleinheiten drehfest gekoppelt ist, und ein Synchronmittel auf, wobei jedes Koppelrad einen Synchronabschnitt zur Zusammenwirkung mit dem Synchronmittel aufweist. Hierbei kann das Synchronmittel ein Zugmittel sein. Beispielsweise kann das Synchronmittel als Zugmittel eine Kette sein, wobei die Synchronabschnitte der Koppelräder Kettenradverzahnungen sind.

Außerdem ist vorgesehen, dass die Koppelräder der Synchroneinrichtung an der Traverse ortsfest und drehbar angeordnet sind. Damit ergibt sich ein kompakter Aufbau.

In einer anderen Ausführung ist die Traverse mit den Gewindestempeln und der Synchroneinrichtung als vormontierte Funktionsbaugruppe ausgeführt. Auf diese Weise kann ein modularisiertes Montagekonzept ermöglicht werden. Außerdem kann die Traverse als vorsynchronisierte Einheit mit den Gewindestempeln im Wartungs- bzw. Servicefall ohne ein erhöhtes Risiko bezüglich Fehlmontage (z.B. unsynchronisierte Gewindestempel) tauschbar sein.

In einer noch anderen Ausführung sind die Gewindestempel der Spindeleinheiten in gleicher Weise und Bauart ausgestaltet. Dadurch kann die Fertigung vereinfacht werden.

In einer weiteren Ausführung ist das Koppelrad der Spindeleinheit mit der Mitnehmereinheit mit einem Ende eines Aufsatzes gekoppelt, der den zugehörigen Gewindestempel teilweise hülsenartig umschließt, wobei ein anderes Ende des Aufsatzes ein Betätigungsende zur manuellen Betätigung aufweist. Damit wird ein kompakter Aufbau erzielt.

In einer noch weiteren Ausführung ist ein reaktionsseitiger Bremsbelag größer ausgebildet als ein zuspannseitiger Bremsbelag. Durch die vergrößerte Fläche kann bei gleichem Verschleißvolumen die Dicke des Reibmaterials des Bremsbelags reduziert werden. Dabei ergeben sich eine höhere Steifigkeit der gesamten Scheibenbremse sowie eine reduzierte Kapazität der Nachstelleinrichtung. Diese reduzierte Kapazität führt außerdem zu Bauraumvorteilen durch kürzere Gewindestempel.

Die Erfindung wird nun anhand beispielhafter Ausführungen mit Bezug auf die beigefügten Zeichnungen näher erläutert. Hierbei zeigen:
- Fig. 1: eine schematische Draufsicht eines Ausführungsbeispiels einer erfindungsgemäßen Scheibenbremse mit einem Ausführungsbeispiel einer erfindungsgemäßen Verschleißnachstellvorrichtung;
- Fig. 2: eine schematische Teilschnittansicht der erfindungsgemäßen Scheibenbremse nach Fig. 1;
- Fig. 3: eine schematische Ansicht einer Variante der erfindungsgemäßen Scheibenbremse nach Fig. 1 von der Zuspannseite her;
- Fig. 4 und 4a: schematische Schnittansichten der Variante der erfindungsgemäßen Scheibenbremse längs der Linie A-A nach Fig. 2 in verschiedenen Verschleißzuständen;
- Fig. 5 und 5a: schematische Schnittansichten der Variante der erfindungsgemäßen Scheibenbremse längs der Linie B-B nach Fig. 2 in verschiedenen Verschleißzuständen; und
- Fig. 6: eine vergrößerte Schnittansicht eines Ausführungsbeispiels einer Nachstelleinrichtung der erfindungsgemäßen Verschleißnachstellvorrichtung nach Fig. 4.

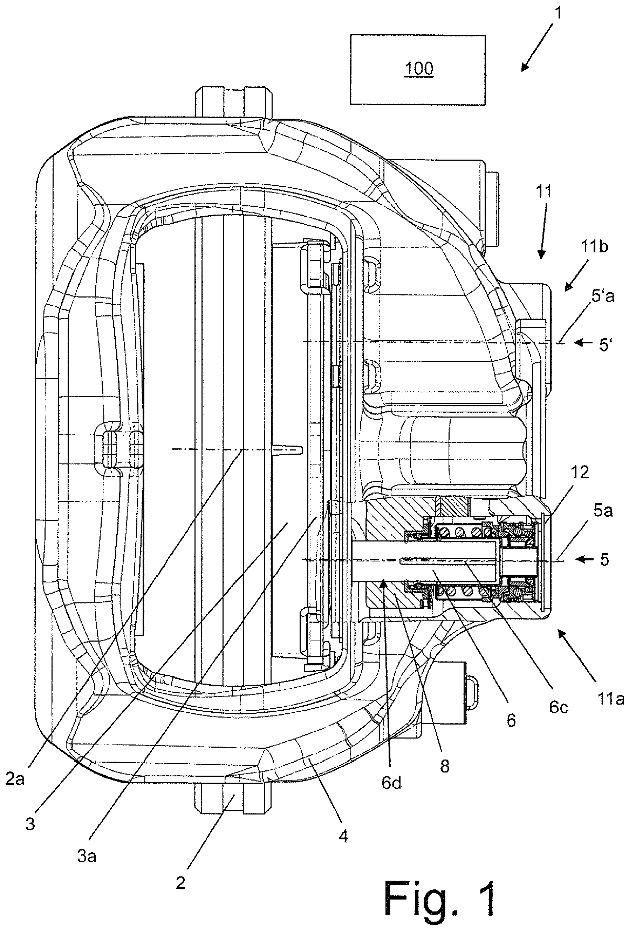

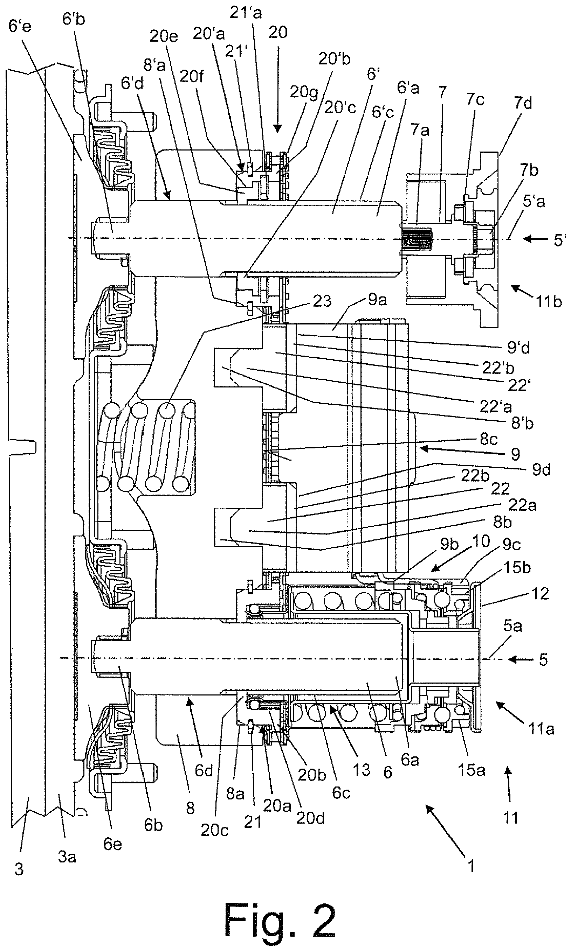

Fig. 1 zeigt ein Ausführungsbeispiel einer erfindungsgemäßen Scheibenbremse 1 in einer Draufsicht mit einem Ausführungsbeispiel einer erfindungsgemäßen Verschleißnachstellvorrichtung 11. In Fig. 2 ist eine schematische Teilschnittansicht der erfindungsgemäßen Scheibenbremse 1 nach Fig. 1 dargestellt.

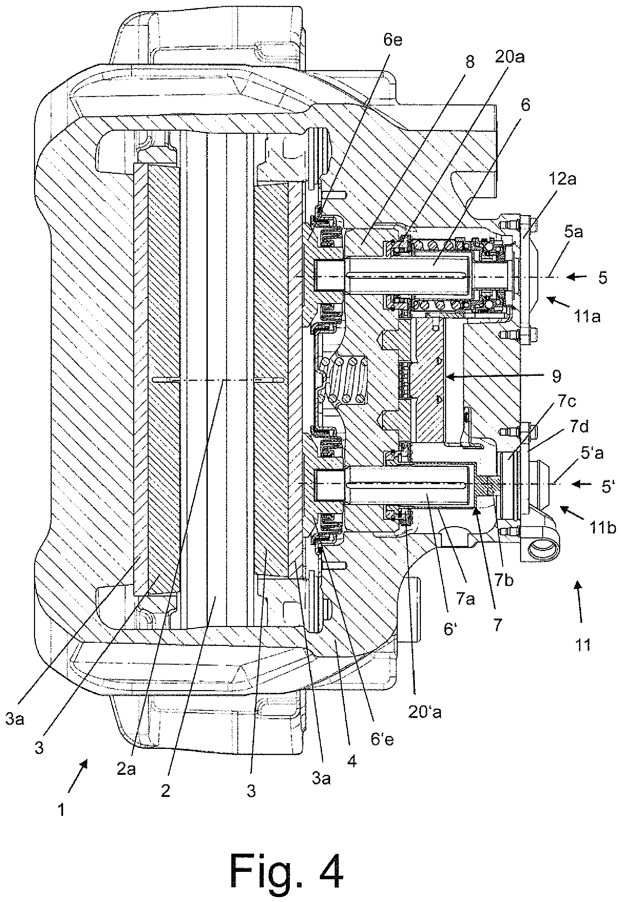

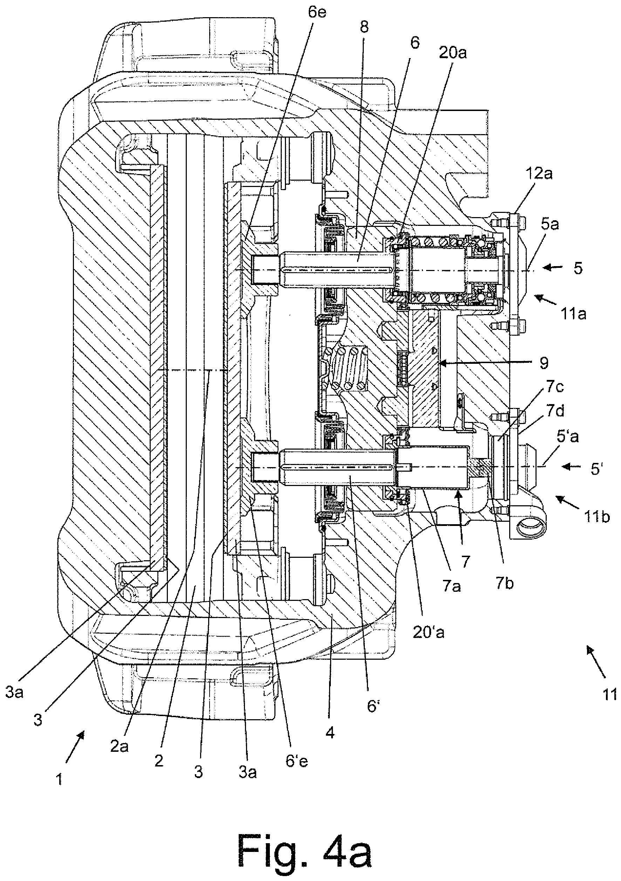

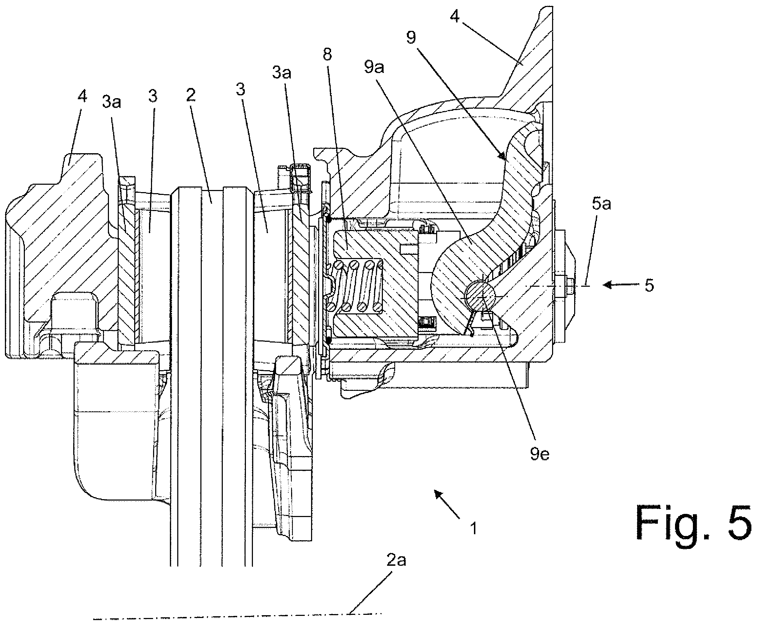

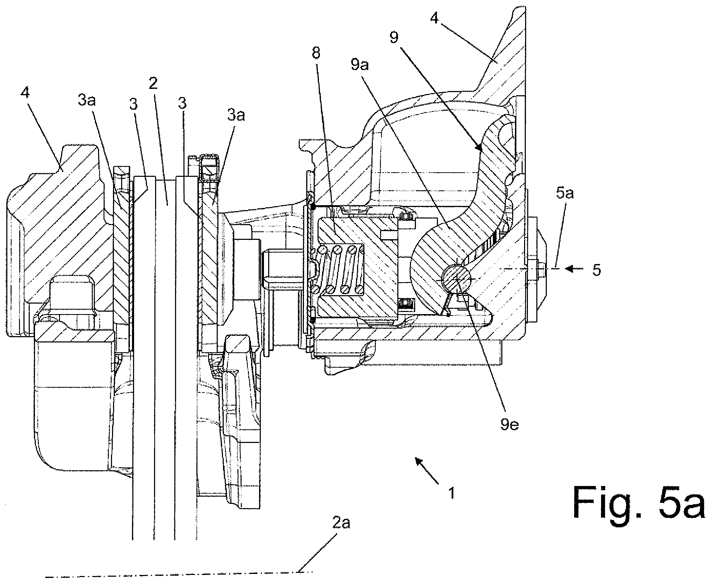

Die Scheibenbremse 1 weist eine Bremsscheibe 2 mit einer Bremsscheibenachse 2a auf. Die Bremsscheibe 2 ist von einem, hier als Schwimmsattel ausgeführten, Bremssattel 4 übergriffen. Beiderseits der Bremsscheibe 2 ist ein Bremsbelag 3 mit jeweils einem Bremsbelagträger 3a angeordnet, wobei hier nur der zuspannseitige Bremsbelag 3 mit seinem Bremsbelagträger 3a gezeigt ist. Der reaktionsseitige Bremsbelag ist hier nicht dargestellt, aber leicht vorstellbar und außerdem weiter unten in Fig. 4, 4a, 5, 5a gezeigt. In diesem Ausführungsbeispiel ist die Scheibenbremse 1 als zweistempelige Bremse mit zwei Spindeleinheiten 5 und 5' ausgebildet. Jede Spindeleinheit 5, 5' weist einen Gewindestempel 6, 6' auf, der als Vollwelle ausgebildet ist.

Weiterhin ist der Scheibenbremse 1 eine Steuereinrichtung 100 zugeordnet, welche unten noch näher erläutert wird.

Der zuspannseitige Bremsbelagträger 3a steht mit den Spindeleinheiten 5, 5' über Druckstücke 6e, 6'e, die an Enden der Gewindestempeln 6, 6' angeordnet sind, in Verbindung. Der andere, reaktionsseitige Bremsbelagträger 3a ist auf der anderen Seite der Bremsscheibe im Bremssattel 4 festgelegt, was z.B. aus den Figuren 4, 4a, 5 und 5a hervorgeht. Die Gewindestempel 6, 6' sind jeweils in einer Traverse 8, die auch als Brücke bezeichnet wird, in Gewinden 6d, 6'd verdrehbar angeordnet.

Die Gewindestempel 6, 6' weisen jeweils ein zuspannseitiges Ende 6a, 6'a und ein belagseitiges Ende 6b, 6b', das mit dem Druckstück 6e, 6'e in Verbindung steht und hier zapfenförmig ist, auf. Weiterhin sind die Gewindestempel 6, 6' jeweils mit einer Anzahl von Axialnuten 6c, 6'c versehen, welche sich in diesem Ausführungsbeispiel jeweils von dem zuspannseitigen Ende 6a, 6'a über etwa zwei Drittel der Länge des jeweiligen Gewindestempels 6, 6' in Richtung auf das jeweilige belagseitige Ende 6b, 6'b am jeweiligen Umfang des Gewindestempels 6, 6' in dessen Längsrichtung erstrecken. Fast die gesamte Länge des Gewindestempels 6, 6' bis auf die zapfenartigen Wellenenden 6b, 6'b ist mit einem Gewinde 6d, 6'd, d.h. Außengewinde, versehen. Die Gewindestempel 6, 6' sind mit ihren Gewinden 6d, 6'd in entsprechende Gewindebohrungen der Traverse 8 eingeschraubt.

Das Gewinde 6d, 6'd als Außengewinde an den Gewindestempel 6, 6' und als korrespondierendes Innengewinde in der Traverse 8 ist hier mit einer Steigung im Bereich der Selbsthemmung ausgeführt. Durch die Drehbewegung der Gewindestempel 6, 6' in der Traverse 8 ändert sich die Axialposition der Gewindestempel 6, 6' relativ zu der Traverse 8. Mit dem Begriff Axialposition ist hier eine Position der Gewindestempel 6, 6' in Axialrichtung der Bremsscheibenachse 2a und der Achsen 5a, 5'a gemeint.

Die Traverse 8 und somit die Gewindestempel 6, 6' sind von einer Zuspannvorrichtung, hier ein Bremsdrehhebel 9 mit einer Schwenkachse 9e (siehe Fig. 5, 5a) rechtwinklig zu der Bremsscheibenachse 2a (siehe Fig. 5, 5a) der Bremsscheibe 2 betätigbar. Der Bremsdrehhebel 9 weist einen Hebelkörper 9a auf, welcher hier über zwei Lagerabschnitte 9c, 9'c über jeweils einen Lagerbock 22, 22' mit der Traverse 8 in Zusammenwirkung steht. Dabei ist jeder Lagerbock 22, 22' mit einem Zentrieransatz 22a, 22'a versehen, welcher in der Traverse 8 in jeweils einer Aufnahme 8b, 8'b eingesetzt ist. Hier ist jeder Zentrieransatz 22a, 22'a zapfenförmig ausgebildet. Dabei ist jede Aufnahme 8b, 8b' zum Bremsdrehhebel 9 hin geöffnet und in ihrer Länge parallel zu einer Längserstreckung der Traverse 8 größer als die Länge eines Zentrieransatzes 22a, 22'a eines Lagerbocks 22, 22'. Jeder Lagerbock 22, 22' steht über ein Schwenklager 22b, 22'b mit dem zugeordneten Lagerabschnitt 9c, 9'c des Bremsdrehhebels 9 in Wirkverbindung.

Die Traverse 8 ist in Richtung der Bremsscheibenachse 2a durch den Bremsdrehhebel 9 verstellbar. Eine Bewegung auf die Bremsscheibe 2 zu wird als Zuspannbewegung bezeichnet, und eine Bewegung in Gegenrichtung wird Lösebewegung genannt. Eine zuspannseitige Seite der Traverse 8 wird hier als Traversenoberseite 8c bezeichnet. Eine nicht weiter erläuterte Rückstellfeder 23 ist in der Mitte der Traverse 8 in einer entsprechenden Ausnehmung auf der belagseitigen Seite der Traverse 8 aufgenommen und stützt sich am Bremssattel 4 ab. Mittels der Rückstellfeder 23 wird die Traverse 8 bei der Lösebewegung in die in Fig. 1 gezeigt gelöste Stellung der Scheibenbremse 1 verstellt.

Ein Abstand zwischen den Bremsbelägen 3 und der Bremsscheibe 2 in der gelösten Stellung wird als Lüftspiel bezeichnet. Infolge von Belag- und Scheibenverschleiß wird dieses Lüftspiel größer. Wenn dies nicht kompensiert wird, kann die Scheibenbremse 1 ihre Spitzenleistung nicht erreichen, da ein Betätigungshub der Betätigungsmechanik, d.h. hier der Betätigungshub bzw. ein Schwenkwinkel des Bremsdrehhebels 9, vergrößert ist (siehe auch Fig. 4a und 5a).

Die Scheibenbremse 1 kann unterschiedliche Kraftantriebe aufweisen. Der Drehhebel 9 wird hier z.B. pneumatisch betätigt. Zu Aufbau und Funktion einer pneumatischen Scheibenbremse 1 wird auf die entsprechende Beschreibung der DE 197 29 024 C1 verwiesen.

Die erfindungsgemäße Verschleißnachstellvorrichtung 11 ist zur Verschleißnachstellung eines vorher festgelegten Lüftspiels, das als Nominallüftspiel bezeichnet wird, ausgebildet. Unter dem Begriff "Nachstellung" ist eine Lüftspielverkleinerung zu verstehen. Das vorher festgelegte Lüftspiel ist durch die Geometrie der Scheibenbremse 1 bestimmt und weist ein so genanntes konstruktives Lüftspiel auf. Mit anderen Worten, die Verschleißnachstellvorrichtung 11 verkleinert ein vorhandenes Lüftspiel, wenn dieses in Bezug auf das vorher festgelegte Lüftspiel zu groß ist.

Die Verschleißnachstellvorrichtung 11 umfasst hier eine Nachstelleinrichtung 11a und eine Mitnehmereinrichtung 11b. Die Nachstelleinrichtung 11a ist an der einen Spindeleinheit 5 koaxial zu dieser, zu deren Gewindestempel 6 und einer Nachstellerachse 5a angeordnet. Die Bauteile und Funktionsgruppen der Nachstelleinrichtung 11a, welche unten noch ausführlich erläutert werden, sind auf einem Tragkörper 13 um diesen herum in axialer Richtung und somit in Richtung der Nachstellerachse 5a angeordnet. Dabei überdeckt die Nachstelleinrichtung 11a das zuspannseitige Ende 6a des zugehörigen Gewindestempels 6 und erstreckt sich zum belagseitigen Ende 6b des zugehörigen Gewindestempels 6 über ungefähr neun Zehntel der gesamten Länge der Axialnuten 6c des zugehörigen Gewindestempels 6 und ist in diesem Bereich um den Gewindestempel 6 herum angeordnet. Mit anderen Worten, die Nachstelleinrichtung 11a ist konzentrisch zu dem zugehörigen Gewindestempel 6 angeordnet und umschließt diesen zumindest teilweise. Außerdem ist ein weiterer Teil der Nachstelleinrichtung 11a in Verlängerung des zuspannseitigen Endes 6a des zugehörigen Gewindestempels 6 bis zu einer Lagerscheibe 12 angeordnet. Dieser letztere Bereich macht ungefähr ein Drittel der gesamten Länge in Richtung der Nachstellerachse 5a der Nachstelleinrichtung 11a aus. Mittels der nicht näher beschriebenen Lagerscheibe 12 ist die Nachstelleinrichtung 11a im Bremssattel 4 abgestützt bzw. eingesetzt.

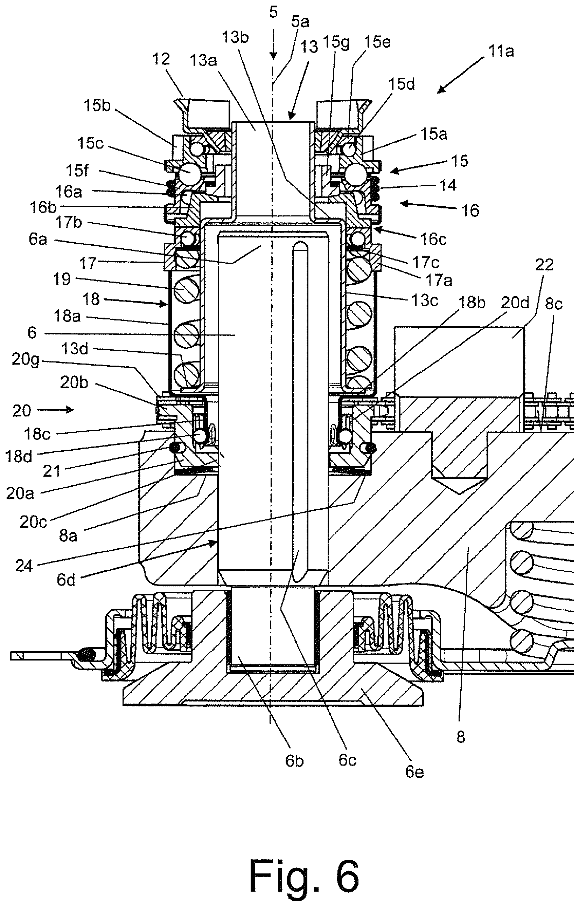

Die Nachstelleinrichtung 11a wird unten im Detail im Zusammenhang mit Fig. 6 noch weiter beschrieben.

Die Mitnehmereinrichtung 11b ist koaxial zu der anderen Spindeleinheit 5', zu deren Gewindestempel 6' und einer Mitnehmerachse 5'a angeordnet. Im Gegensatz zu dem Gewindestempel 6 der Nachstelleinrichtung 11a ist das zuspannseitige Ende 6'a des Gewindestempels 6' der Mitnehmereinrichtung 11b in diesem Ausführungsbeispiel mit einem Profilansatz ausgebildet, auf welchem ein Aufsatz 7 mit einem Aufsatzabschnitt 7a drehfest aufgesetzt ist. Das andere, zuspannseitige Ende des Aufsatzes 7 ist als ein Betätigungsende 7b mit einem weiteren Profil zum Ansatz eines Werkzeugs zur Verstellung der Verschleißnachstellvorrichtung 11 bei Wartungsarbeiten ausgebildet. Um den Aufsatz 7 herum ist ein nicht näher erläutertes Einsatzteil in Form eines Einbaugehäuses 7d zum Einsatz und zur Befestigung im Bremssattel 4 angeordnet und mit der Mitnehmereinrichtung 11b entsprechend verbunden bzw. bildet für diese eine Lagerung. Innerhalb des Einbaugehäuses 7d ist ein nicht näher beschriebener Sensor 7c eingebaut, welcher über den Aufsatz 7 mit dem Gewindestempel 6' drehfest gekoppelt ist. Ein Aufnehmerelement des Sensors kann z.B. ein Winkelsensor sein, z.B. ein Potentiometer, und erfasst die Winkellage des Gewindestempels 6' um die Mitnehmerachse 5'a. Die Auswertung dieser Winkellage lässt einen Rückschluss auf den Verschleißzustand der Bremsbeläge 3 und der Bremsscheibe 2 zu, denn der Gewindestempel 6' ist über eine unten noch näher erläuterte Synchroneinrichtung 20 mit dem Gewindestempel 6 gekoppelt. So dient der Sensor 7c zur Erfassung eines Nachstellwegs, d.h. des Verschleißzustands, und ist über nicht gezeigte Kabel (elektrisch oder optisch leitend) mit der Steuereinrichtung 100, welche die Auswertung vornehmen kann, verbunden.

Die Nachstellerachse 5a, die Mitnehmerachse 5'a und die Bremsscheibenachse 2a sind parallel zueinander angeordnet.

Die Nachstelleinrichtung 11a der Verschleißnachstellvorrichtung 11 steht über einen Antrieb 10 mit dem Drehhebel 9 in Zusammenwirkung. Der Antrieb 10 umfasst einen Betätiger 9b, welcher mit dem Bremsdrehhebel 9 verbunden ist, und ein Antriebselement 15a der Nachstelleinrichtung 11a. Der Betätiger 9b ist an seinem zuspannseitigen Ende mit einer Betätigungskontur 9c versehen, welche z.B. zahnförmig ist und mit einem Konturabschnitt 15b des Antriebselementes 15a der Nachstelleinrichtung 11a in Eingriff steht. Der Konturabschnitt 15b des Antriebselementes 15a korrespondiert mit der Betätigungskontur 9c des Betätigers 9b.

In unbetätigter Stellung, d.h. in Lösestellung, ist zwischen der Betätigungskontur 9c des Betätigers 9b und dem Konturabschnitt 15b des Antriebselementes 15a der Nachstelleinrichtung 11a ein Spiel vorgesehen. Dieses Spiel repräsentiert unter Berücksichtigung der Übersetzungsverhältnisse am Bremsdrehhebel 9 das konstruktive Lüftspiel der Scheibenbremse 1. Mit anderen Worten, eine Betätigung der Nachstelleinrichtung 11a erfolgt erst, nachdem die Traverse 8 bei einer Zuspannung der Scheibenbremse 1, d.h. bei Bremsbetätigung, um einen größeren Weg als das konstruktive Lüftspiel auf die Bremsscheibe 2 hin verschoben worden ist.

Die Nachstelleinrichtung 11a und die Mitnehmereinrichtung 11b sind durch die Synchroneinrichtung 20 derart gekoppelt, dass eine Verdrehbewegung des Gewindestempels 6 um die Nachtstellerachse 5a eine entsprechende Verdrehbewegung des Gewindestempels 6' um die Mitnehmerachse 5'a bewirkt und umgekehrt. Die Synchroneinrichtung 20 ist hier auf der Traversenoberseite 8c der Traverse 8 zwischen der Traverse 8 und dem Bremsdrehhebel 9 angeordnet und umfasst ein Koppelrad 20a, das mit dem Gewindestempel 6 der einen Spindeleinheit 5 und mit der Nachstelleinrichtung 11a gekoppelt ist, ein weiteres Koppelrad 20'a, das mit der Gewindestempel 6' der anderen Spindeleinheit 5' und mit der Mitnehmereinrichtung 11b gekoppelt ist, und ein Synchronmittel 20g, mit welchem die Koppelräder 20a und 20'a gekoppelt sind. Das Synchronmittel 20g kann beispielsweise aus einem Wälzgetriebe mit Zahnrädern bestehen. Es sind natürlich auch andere Ausführungen möglich. In diesem Ausführungsbeispiel ist das Synchronmittel 20g ein Zugmittel, vorzugsweise eine Kette. So sind die Koppelräder 20a, 20'a als Kettenräder ausgebildet. Damit ist eine synchrone Bewegung der Gewindestempel 6, 6' der Spindeleinheiten 5 und 5' bei Verschleißnachstellvorgängen (Antrieb durch die Nachstelleinrichtung 11a) und Einstellungen bei Wartungsarbeiten, z.B. Belagwechsel, (manueller Antrieb über das Betätigungsende 7b der Mitnehmereinrichtung 11b) gewährleistet.

Jedes Koppelrad 20a, 20'a ist ortsfest in einer mit dem jeweils zugeordneten Koppelrad 20a, 20'a korrespondierenden Aufnahme 8a, 8'a in der Traverse 8 drehbar aufgenommen. Die Aufnahmen 8a, 8'a weisen hier mit ihren Öffnungen zur Zuspannseite der Scheibenbremse 1, d.h. sie sind von der Traversenoberseite 8c in die Traverse 8 eingeformt.

Jedes Koppelrad 20a, 20'a weist einen Körper auf, der zuspannseitig hohlzylinderförmig ausgebildet ist. An dem zuspannseitigen Endumfang ist jeweils ein Synchronabschnitt 20b, 20'b angeformt, der in diesem Ausführungsbeispiel eine Verzahnung für einen Kette als Synchronmittel 20f ausgebildet ist. Der Synchronabschnitt 20b, 20'b (hier der Zahnkranz des Kettenrads) ist von dem Synchronmittel 20f, der Kette, in einem Winkel von ungefähr 180° umschlungen und steht mit diesem in Eingriff.

Zunächst wird das Koppelrad 20a, das der Spindeleinheit 5 mit der Nachstelleinrichtung 11a zugeordnet ist, beschrieben. Der hohlzylinderförmige Körper des Koppelrads 20a ist an seiner Innenwand mit einem sich axial erstreckenden Innenprofil 20d (siehe auch Fig. 6) ausgebildet, welches mit dem belagseitigen Ende der Nachstelleinrichtung 11a zusammenwirkt, was unten im Zusammenhang mit Fig. 6 noch näher beschrieben wird. Das belagseitige Ende des hohlzylinderförmigen Körpers des Koppelrads 20a ist mit einem innen liegenden Eingriffsabschnitt 20c versehen, welcher hier Nocken aufweist, die mit den Axialnuten 6c des zugehörigen Gewindestempels 6 korrespondieren und mit diesen in Eingriff stehen. Der hohlzylinderförmige Körper des Koppelrads 20a ist hier zu etwa zwei Drittel in der zugehörigen Ausnehmung 8a der Traverse 8 aufgenommen, wobei der Außendurchmesser des hohlzylinderförmigen Körpers des Koppelrads 20a mit dem Innendurchmesser der Ausnehmung 8a der Traverse 8 korrespondiert. Eine axiale Festlegung des hohlzylinderförmigen Körpers des Koppelrads 20a und somit des Koppelrads 20a selbst in der Ausnehmung 8a der Traverse 8 ist hier durch ein Sicherungselement 21, z.B. ein Seegerring, realisiert. Das Sicherungselement 21 ist in einer radialen Nut in der Ausnehmung 8a festgelegt.

Auch das Koppelrad 20'a, das mit dem Gewindestempel 6' der anderen Spindeleinheit 5' mit der Mitnehmereinrichtung 11b gekoppelt ist, weist einen ähnlichen hohlzylinderförmigen Körper wie das Koppelrad 20a auf. Im Unterschied zu dem Koppelrad 20a ist in diesen hohlzylinderförmigen Körper des Koppelrads 20'a ein ringförmiges Einsatzelement 20e, welches auch als Synchronisationsring bezeichnet wird, eingesetzt, über ein nicht näher beschriebenes Sicherungselement 21' axial und über eine nicht näher gezeigte Profilierung, beispielsweise eine Kerbverzahnung mit entsprechend feiner Verzahnung, radial in dem hohlzylinderförmigen Körper des Koppelrads 20'a festgelegt. Aufgrund der radialen Profilfestlegung des Einsatzelementes 20e kann eine Einstellung der Synchroneinrichtung 20 erfolgen. Wenn bei der Montage der Scheibenbremse 1 beide Gewindestempel 6, 6' in die gleiche Axialposition relativ zur Traverse 8 bewegt worden sind, wird das Einsatzelement 20e als Synchronisationsring in das Koppelrad 20'a eingesetzt. Das Einsatzelement 20e weist den Eingriffsabschnitts 20'c zum Eingriff in den Axialnuten 6'c des zugehörigen Gewindestempels 6' auf.

Die Eingriffsabschnitte 20c, 20'c ermöglichen eine drehfeste Kopplung der Koppelräder 20a, 20'a mit den zugehörigen Gewindestempels 6, 6' der Spindeleinheiten 5, 5'. Gleichzeitig wird durch die Axialnuten 6c, 6'c erreicht, dass die mit ihnen in Eingriff stehenden Nocken der Eingriffsabschnitte 20c, 20'c in den relativ zu den Axialnuten 20c, 20'c in Richtung der Nachstellerachse 5a bzw. der Mitnehmerachse 5'a axial verschiebbar geführt sind. Auf diese Weise wird eine axiale Verstellung der Gewindestempel 6, 6' bei Nachstellung relativ zu der Traverse 8 aufgrund der Gewinde 6d, 6'd nicht behindert.

Das Synchronmittel 20f, hier die Kette, der auf der Traverse 8 angeordneten Synchroneinrichtung 20 ist auf der Oberseite 8c der Traverse 8 angeordnet und geführt, wobei das Synchronmittel in Längsrichtung der Traverse 8 an den Längsseiten der Lagerböcke 22, 22' ebenfalls geführt und in Richtung der Drehachse der Bremsscheibe 2 gehalten ist.

Die Kopplung des Koppelrads 20a mit der Nachstelleinrichtung 11a wird im Zusammenhang mit Fig. 6 noch weiter erläutert.

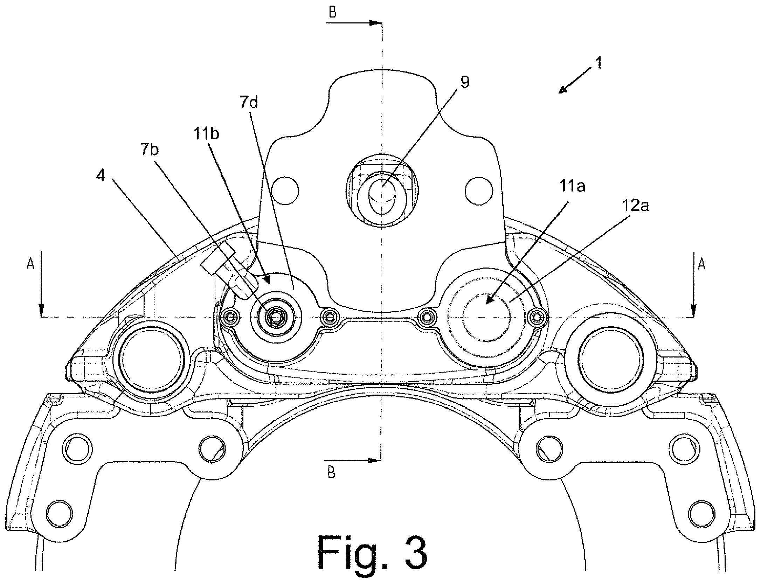

Fig. 3 zeigt eine schematische Ansicht einer Variante der erfindungsgemäßen Scheibenbremse 1 nach Fig. 1 von der Zuspannseite her. Fig. 4 und 4a stellen schematische Schnittansichten der Variante der erfindungsgemäßen Scheibenbremse 1 längs der Linie A-A nach Fig. 2 in verschiedenen Verschleißzuständen der Scheibenbremse 1 dar. Und Fig. 5-5a zeigen schematische Schnittansichten der Variante der erfindungsgemäßen Scheibenbremse 1 längs der Linie B-B nach Fig. 2 in verschiedenen Verschleißzuständen.

In Fig. 4 und Fig. 5 ist die Scheibenbremse 1 in einem Verschleißzustand gezeigt, in welchem die Bremsbeläge 3 und die Bremsscheibe 2 neu oder nur wenig verschlissen sind. Im Gegensatz dazu zeigen Fig. 4a und Fig. 5a einen hohen Verschleißzustand der Bremsbeläge 3 und der Bremsscheibe 2. Dabei ist eine Nachstellung durch die Verschleißnachstellvorrichtung 11 eindeutig zu erkennen, wobei die Gewindestempel 6, 6' zu mehr als zwei Drittel ihrer Länge belagseitig aus der Traverse 8 herausgeschraubt sind.

In Fig. 3 ist die Zuspannseite der Scheibenbremse 1 gezeigt, wobei in dieser Variante die Nachstelleinrichtung 11a rechts und die Mitnehmereinrichtung 11b links in der Zeichnung angeordnet ist. An der Mitnehmereinrichtung 11b ist eine Kabeleinführung für das Kabel des Sensors 7c zu erkennen, die nicht näher beschrieben wird. Die Erzeugung der Zuspannkraft erfolgt über den Bremsdrehhebel 9, der als Exzenterhebel ausgebildet ist. An der gezeigten Zuspannseite des Bremssattels 4 ist ein nicht näher bezeichneter Anschlussflansch z.B. für einen Pneumatikzylinder zu erkennen, welcher mit einem längeren von zwei Hebelarmen des Bremsdrehhebels 9 zusammenwirkt. Die Hebelarme sind nicht näher bezeichnet, aber leicht vorstellbar. Dies ist in den Figuren 5 und 5a dargestellt. Der Bremsdrehhebel 9 ist über ein Gleitlager in einer Verschwenkachse 9e im Bremssattel 4 verschwenkbar gelagert. Eine Krafteinleitung in den längeren Hebelarm des Bremsdrehhebels 9 erfolgt z.B. durch einen nicht gezeigten Pneumatikzylinder, dessen Betätigungsstößel am oberen Ende des Bremsdrehhebels 9 angreift und eine Kraft zur Zuspannung der Scheibenbremse 1 parallel zur Bremsscheibenachse 2a in den Bremsdrehhebel 9 einleitet. Die Kraftübertragung auf die Traverse 8 erfolgt über den kürzeren Hebelarm.

Durch die Traverse 8 wird über die Gewinde 6d, 6'd die Zuspannkraft auf die beiden Gewindestempel 6, 6' verteilt und über die Druckstücke 6e, 6'e auf den zuspannseitigen Bremsbelag 3 übertragen. Nach Überwinden des konstruktiven Lüftspiels auf der Zuspannseite stützt sich der zuspannseitige Bremsbelag 3 (in den Figuren 4, 4a, 5, 5a der rechte Bremsbelag 3) an der Bremsscheibe 2 ab und der Bremssattel 4, welcher in Richtung der Bremsscheibenachse 2a verschiebbar am Bremsträger (nicht näher gezeigt) gelagert ist, wird verschoben bis der reaktionsseitige Bremsbelag 3 (in den Figuren 4, 4a, 5, 5a der linke Bremsbelag 3) auch an der anderen Seite der Bremsscheibe 2 zur Anlage kommt.

In dieser Variante ist der reaktionsseitige Bremsbelag 3 mit seinem Bremsbelagträger 3a größer ausgeführt als der zuspannseitige Bremsbelag 3. Durch seine vergrößerte Fläche kann bei gleichem Verschleißvolumen die Dicke des Reibmaterials des Bremsbelags 3 reduziert werden. Dabei ergeben sich eine höhere Steifigkeit der gesamten Scheibenbremse 1 sowie eine reduzierte Kapazität der Verschleißnachstellung. Diese reduzierte Kapazität führt zu Bauraumvorteilen aufgrund kürzerer Gewindestempel und natürlich auch zur Gewichtsreduzierung.

In dieser Variante verlaufen die Axialnuten 6c, 6'c der Gewindestempel 6, 6' über die gesamte Länge der Gewindestempel 6, 6' zusammen mit dem Außengewinde 6d, 6'd.

In Fig. 4, 4a ist dargestellt, dass die Nachstelleinrichtung 11a der Verschleißnachstellvorrichtung 11 mit einem Deckel 12a über der Lagerscheibe 12, die im Bremssattel 4 mit der Nachstelleinrichtung 11a eingesetzt ist, an dem Bremssattel 4 befestigt ist.

Die Mitnehmereinrichtung 11b weist im Unterschied zu der in Fig. 2 gezeigten Ausführung einen unterschiedlich gestalteten Aufsatz 7 auf. Damit ist es möglich, dass die Gewindestempel 6 und 6' in gleicher Ausführung hergestellt werden können. Und zwar ist der Aufsatz 7 in Gestalt einer Hülse ausgeführt, deren Aufsatzabschnitt 7a konzentrisch zum Gewindestempel 6' um diesen herum angeordnet und an dem Koppelrad 20'a verdrehsteif angebunden ist. Diese Hülse des Aufsatzes 7 verfügt über eine Verbindung, z.B. eine in einfacher Weise zusammensteckbare drehfeste Kupplung, zu dem Betätigungsende 7b, welches nach außen geführt ist (siehe Fig. 3) und gleichzeitig eine drehfeste Kopplung mit dem Sensor 7c (siehe Fig. 2) bildet.

Fig. 6 zeigt eine vergrößerte Schnittansicht der Nachstelleinrichtung 11a der erfindungsgemäßen Verschleißnachstellvorrichtung 11 nach Fig. 4.

Unter dem Begriff "oben" bzw. "Oberseite" ist die Seite des jeweiligen Bauteils zu verstehen, welche im eingebauten Zustand in der Scheibenbremse 1 zur Zuspannseite weist. Die "Unterseite" des jeweiligen Bauteils bzw. "unten" weist dann zur Bremsscheibe 2.

Die Nachstelleinrichtung 11a umfasst die Lagerscheibe 12, den Tragkörper 13, das Antriebselement 15a, eine Kugelrampenkupplung 16 mit einer Überlastkupplung 16c, die als Rutschkupplung ausgeführt ist, ein Druckelement 17, ein Abtriebselement 18 und mindestens ein Kraftspeicherelement 19.

Die Lagerscheibe 12 ist in dem Dokument DE 10 2004 037 771 A1 beschrieben. Sie dient zur Lagerung und Abstützung der Nachstelleinrichtung 11a am Bremssattel 4 dergestalt, dass sie einerseits in einem oberen Endbereich eines Lagerabschnitts 13a des Tragkörpers 13 angebracht ist und andererseits eine Lagerung für das Antriebselement 15a bildet.

Der Tragkörper 13 ist in Hülsengestalt mit dem oberen Lagerabschnitt 13a und einem Aufnahmeabschnitt 13c gebildet. Der Lagerabschnitt 13a weist einen geringeren Außendurchmesser auf als der Aufnahmeabschnitt 13c und ist mit diesem über eine Schulter 13b verbunden. Eine axiale Länge des Lagerabschnitts 13a des Tragkörpers 13 beträgt ungefähr ein Drittel der Gesamtlänge des Tragkörpers 13, wobei eine Gesamtlänge der Nachstelleinrichtung 11a etwa die Gesamtlänge des Tragkörpers 13 plus ungefähr ein Viertel der Gesamtlänge des Tragkörpers 13 aufweist. Ein Innendurchmesser des Aufnahmeabschnitts 13c ist so groß ausgeführt, dass der Aufnahmeabschnitt 13c des Tragkörpers 13 den zugehörigen Gewindestempel 6 zumindest teilweise umgibt. Ein unteres Ende des Aufnahmeabschnitts 13c weist eine sich radial nach außen erstreckende, kragenförmige Umbördelung auf, die als ein Auflageabschnitt 13d für das Kraftspeicherelement 19 dient.

Das Antriebselement 15a ist Bestandteil einer Kugelrampenkupplung 15 mit einem Freilauf 16 und weist beiderseits in Axialrichtung jeweils eine Wälzkörperanordnung auf. An der Oberseite ist das Antriebselement 15a dazu mit einer innen liegenden umlaufenden Wälzkörperlauffläche für Stützkugeln 15d ausgebildet, die mit einer an der Lagerscheibe 12 abgestützten Stützscheibe 15e eine obere Wälzkörperanordnung bilden. An der umlaufenden Außenseite des Antriebselementes 15a ist der Konturabschnitt 15b eingeformt. Der Konturabschnitt 15b kann z.B. eine Verzahnung sein, welche mit der Betätigungskontur 9c des Betätigers 9b des Bremsdrehhebels 9 korrespondiert. Der Konturabschnitt 15b erstreckt sich radial zur Nachstellerachse 5a und ist mit dem Antriebselement 15a an dem oberen Ende der Nachstelleinrichtung 11a angeordnet, wodurch in Bezug auf den Betätiger 9b für diesen ein langer Hebelarm möglich ist (siehe z.B. Fig. 2).

Die Wälzkörperanordnung an der Unterseite des Antriebselementes 15a wird von Rampenkugeln 15c und einem Rampenring 15f der Kugelrampenkupplung 15 gebildet. Sowohl die Unterseite des Antriebselementes 15a als auch die ihr gegenüberliegende Oberseite des Rampenrings 15f sind mit nicht näher dargestellten Kugelrampen für die Rampenkugeln 15c ausgebildet, die zwischen dem Antriebselement 15a und dem Rampenring 15f angeordnet sind. Der Rampenring 15f und das Antriebselement 15a sind weiterhin mittels eines elastischen Kopplungselementes 14, beispielsweise eine Schlingfeder, gekoppelt. Das elastische Kopplungselement 14 wirkt einerseits auf die Kugelrampenkupplung 15 derart ein, dass die Rampenkugeln 15c in den Kugelrampen in einer bestimmten Position stehen bzw. in eine solche gestellt werden. Andererseits wirkt das elastische Kopplungselement 14 auf den Freilauf 16 zur Spielverringerung ein.

Der Freilauf 16 umfasst den Rampenring 15f, Freilaufkugeln 16a und einen Abtriebsring 16b. Die Freilaufkugeln 16a sind zwischen der Unterseite des Rampenrings 15f, die von einem sich axial nach unten erstreckenden Kragen mit konischer Innenseite umlaufend umgeben ist, und einer konischen Außenseite des Abtriebsrings 16b in nicht näher dargestellter Weise mit Bildung einer Freilauffunktion angeordnet, wodurch eine Relativbewegung zwischen dem Rampenring 15f und dem Abtriebsring 16b in "Durchlassrichtung" ermöglicht ist.

Die Kugelrampenkupplung 15 mit dem Freilauf 16 umfasst somit das Antriebselement 15a, Rampenkugeln 15c, den Rampenring 15f, die Freilaufkugeln 16a und den Abtriebsring 16b.

An dem unteren Ende des Abtriebsrings 16b ist ein sich radial nach außen erstreckender Flansch angeordnet. Der sich axial nach unten erstreckenden Kragen des Rampenrings 15f überdeckt den Abtriebsring 16b außen zu etwa zwei Drittel in Axialrichtung. Der untere Rand dieses Kragens und der äußere umlaufende Rand des Flansches des Abtriebsrings 16b sind mit einem nicht näher bezeichneten Dichtkragen nach außen hin abgedichtet.

Die Oberseite des Abtriebsrings 16b erstreckt unterhalb des Rampenrings 15f radial nach innen und steht mit einer Unterseite eines Flansches einer Stützhülse 15g in Kontakt. Die Stützhülse 15g erstreckt sich von diesem Flansch ausgehend axial nach oben, wobei ihre Außenwand zwischen dem Lagerabschnitt 13a des Tragkörpers 13 und den Innenseiten des Rampenrings 15f und des Antriebselementes 15a angeordnet ist. Ein Teil des Außenumfangs des Flansches der Stützhülse 15g zentriert den Rampenring 15f

Der Abtriebsring 16b weist eine innere Ausdrehung auf, deren Innendurchmesser mit dem Außendurchmesser des Aufnahmeabschnitts 13c des Tragkörpers 13 korrespondiert und die Schulter 13b des Tragkörpers 13 aufnimmt.

Die Lagerscheibe 12, das Antriebselement 15a mit seinen beidseitigen Wälzlageranordnungen (Stützkugeln 15d und Kugelrampenkupplung 15), dem Kopplungselement 14 und dem Freilauf 16 sowie die Stützhülse 15g sind um den Lagerabschnitt 13a des Tragkörpers 13 herum in Reihe angeordnet.

Unter dem Flansch des Abtriebsrings 16b ist ein Druckelement 17 angeordnet. Das Druckelement 17 weist eine abgestufte, hohlzylinderförmige Gestalt mit einem sich nach innen radial erstreckenden Rand auf, dessen Oberseite mit der Unterseite des Flansches des Abtriebsrings 16b in Kontakt steht und eine Überlastkupplung 16c bildet. Dieser obere Rand des Druckelementes 17 ist mit einer axialen Bohrung versehen, die einen Innendurchmesser aufweist, der mit dem Außendurchmesser des Aufnahmeabschnitts 13c des Tragkörpers 13 korrespondiert. Das Druckelement 17 ist damit auf dem Aufnahmeabschnitt 13c in Axialrichtung verschiebbar zentriert.

Von diesem oberen Rand des Druckelementes 17 erstreckt sich in Axialrichtung ein kurzes Stück Zylinderwand nach unten, welches dann in einer Abstufung in einen sich weiter in Axialrichtung nach unten erstreckenden Kopplungsabschnitt 17a größeren Durchmessers übergeht. Die axiale Länge des Kopplungsabschnitts 17a ist etwa doppelt so groß wie die axiale Länge der darüber angeordneten Zylinderwand.

Unterhalb des oberen Rands des Druckelementes 17 ist eine Wälzkörperlauffläche vorgesehen, welche mit Druckkugeln 17b in Kontakt steht. Die Druckkugeln 17b sind radial von dem kurzen Stück Zylinderwand des Druckelementes 17 begrenzt und stehen unten mit einer Druckscheibe 17c in Kontakt. Zwischen der Unterseite der Druckscheibe 17c und dem Auflageabschnitt 13d des Tragkörpers 13 ist das Kraftspeicherelement 19 angeordnet, welches hier als Druckfeder ausgeführt ist. Die oberste Windung des Kraftspeicherelementes 19 ist unter der Druckscheibe 17c in dem Druckelement 17 von dessen umlaufenden Kopplungsabschnitt 17a aufgenommen.

Das Kraftspeicherelement 19 erzeugt eine Axialkraft zwischen dem Auflageabschnitt 13d des Tragkörpers 13 und der Stützscheibe 15e, die mit der Lagerscheibe 12 und über diese mit dem oberen Ende des Tragkörpers 13 verbunden ist. Auf diese Weise werden die Funktionselemente der Nachstelleinrichtung 11a zusammengedrückt. Außerdem erfolgt durch das Kraftspeicherelement 19 eine Vorspannung der Kugelrampenkupplung 16 und der Überlastkupplung 16c.

Die Unterseite des Kopplungsabschnitts 17a des Druckelementes 17 ist mit dem oberen Abschnitt des Abtriebselementes 18 verbunden. Das Abtriebselement 18 ist ähnlich wie der Tragkörper 13 in Hülsengestalt mit zwei zylindrischen Abschnitten 18a, 18c gebildet, die über einen Schulterabschnitt 18b verbunden sind, wobei der obere zylindrische Abschnitt als ein Abtriebskopplungsabschnitt 18a einen größeren Durchmesser aufweist als der unten zylindrische Abschnitt, der als Abtriebsabschnitt 18c bezeichnet ist. Mit anderen Worten, das Abtriebselement 18 ist im Gegensatz zum Tragkörper 13 um 180° um die Horizontale gedreht angeordnet und überdeckt mit seinem Abtriebskopplungsabschnitt 18a den Aufnahmeabschnitt 13c des Tragkörpers 13 zu mehr als drei Viertel der Länge des Aufnahmeabschnitt 13c des Tragkörpers 13. Die axiale Länge des Abtriebskopplungsabschnitt 18a beträgt ungefähr drei Viertel der Länge des Aufnahmeabschnitt 13c des Tragkörpers 13, und die axiale Länge des Abtriebsabschnitts 18c des Abtriebselementes 18 beträgt etwa ein Drittel der Länge des Abtriebskopplungsabschnitt 18a des Abtriebselementes 18. Dabei ist das Kraftspeicherelement 19 zwischen der Außenseite des Aufnahmeabschnitts 13c und der Innenseite des Abtriebskopplungsabschnitt 18a angeordnet. Der Schulterabschnitt 18b des Abtriebselementes 18 liegt unterhalb des Auflageabschnitts 13d des Aufnahmeabschnitt 13c des Tragkörpers 13.

Der Abtriebsabschnitt 18c des Abtriebselementes 18 erstreckt sich in den Innenraum des Koppelrads 20a mit einem radialen Abstand zu dem Innenprofil 20d des Koppelrads 20a. Im unteren Endbereich des Abtriebsabschnitt 18c sind in diesem Ausführungsbeispiel nicht näher bezeichnete Aufnahmen eingeformt, in welchen jeweils ein Übertragungselement 18d, hier sind die Übertragungselemente 18d als Kugeln ausgebildet, beweglich angeordnet ist. Die Übertragungselemente 18d stellen einerseits einen Eingriff mit dem Abtriebselement 18b und andererseits einen Eingriff mit dem Innenprofil 20d des Koppelrads 20a her. Auf diese Weise ist eine drehfeste Kopplung des Abtriebselementes 18 mit dem Koppelrad 20a gebildet. Außerdem bildet diese Art Kopplung ein kardanisches Gelenk, wodurch Schwenk- und Vertikalbewegungen der Traverse 8 ausgeglichen werden.

Das Koppelrad 20a wiederum steht mit dem Eingriffsabschnitt 20c, der hier mehrere Nocken aufweist, seiner Unterseite mit den Axialnuten 6c des Gewindestempels 6 in drehfestem Eingriff, wobei eine relative axiale Bewegung zwischen dem Koppelrad 20a und somit zwischen der Traverse 8 und dem Gewindestempel 6 ermöglicht ist. Dies ist auch zwischen dem Koppelrad 20'a und dem Gewindestempel 6' wie oben bereits beschrieben der Fall, wobei die Koppelräder 20a und 20'a über ihre Synchronabschnitte 20b mittels des Synchronmittels 20g, hier eine Kette, gekoppelt sind.

Mit anderen Worten, die Nachstelleinrichtung 11a ist über das Koppelrad 20a mit dem Gewindestempel 6 und über die Kette (Synchronmittel 20g) der Synchroneinrichtung 20 über das andere Koppelrad 20'a mit dem anderen Gewindestempel 6' der Mitnehmereinrichtung 11b formschlüssig gekoppelt.

Das Koppelrad 20a (und ebenfalls das andere Koppelrad 20'a) ist an der Traverse 8 ortsfest und drehbar angeordnet. In Fig. 6 ist dargestellt, dass das Koppelrad 20a in der Aufnahme 8a der Traverse 8 eingesetzt und mit dem Sicherungselement 21 axial festgelegt ist. Außerdem ist zwischen der Unterseite mit dem Eingriffsabschnitt 20c des Koppelrads 20a und dem Boden der Aufnahme 8a eine Axialfeder 24, z.B. eine Tellerfeder, angeordnet, wodurch eine definierte Lage des Koppelrads 20a zum Synchronmittel 20g geschaffen ist.

So ist es auch möglich, dass die Nachstelleinrichtung 11a ausgetauscht werden kann, ohne die Synchroneinrichtung 20 auszubauen, denn der Abtriebsabschnitt 18c kann aus dem Koppelrad 20a in einfacher Weise herausgezogen und wieder eingesteckt werden.

Im Folgenden wird die Funktionsweise der Nachstelleinrichtung 11a erläutert.

Bei jeder Zuspannbewegung des Bremsdrehhebels 9 (Fig. 4, 4a, 5, 5a) wird über den mit dem Bremsdrehhebel 9 verbundenen Betätiger 9b mittels der Betätigungskontur 9c, die mit dem Konturabschnitt 15b des Antriebselementes 15a der Nachstelleinrichtung 11a in Eingriff steht, zunächst das konstruktive Lüftspiel durchlaufen und dann über das Antriebselement 15a um die Nachstellerachse 5a in einer bestimmten Drehrichtung, beispielsweise im Uhrzeigersinn, verdreht.

In dem Fall, in welchem eine Nachstellung des Lüftspiels erforderlich geworden ist, wird diese Drehbewegung des Antriebselementes 15a über die Kugelrampenkupplung 15 auf den Rampenring 15f übertragen. In dieser Drehbewegung sperrt der Freilauf 16 und wirkt als drehfeste Kupplung, derart, dass diese Drehbewegung weiter auf den Abtriebsring 16b übertragen wird.

Der Abtriebsring 16b seinerseits überträgt diese Drehbewegung über die Überlastkupplung 16c auf das Druckelement 17, welches mit dem Abtriebselement 18 drehfest verbunden ist. Mittels des Abtriebsabschnitts 18c des Abtriebselementes 18 wird durch die Übertragungselemente 18d, die hier als Kugeln ausgebildet sind, die Drehbewegung zur Nachstellung über das Innenprofil 20d auf das Koppelrad 20a übertragen. Das Koppelrad 20a ist seinerseits mit dem Gewindestempel 6 und über das Synchronmittel 20g mit dem anderen Koppelrad 20'a mit dem Gewindestempel 6' der Mitnehmereinrichtung 11b drehfest gekoppelt und überträgt so die Drehbewegung der Nachstelleinrichtung 11a auf die Gewindestempel 6, 6', welche in der Traverse 8 in den Gewinden zur Nachstellung des Bremsbelags 3 verdreht werden.

Sobald die Bremsbeläge 3 durch die Nachtstellbewegung an der Bremsscheibe 2 anliegen, werden die Gewindestempel 6, 6' in der Traverse 8 durch die dabei aufgebaute Spannkraft und daraus resultierende Reibkraft in den Gewinden 6d, 6'd in der Traverse 8 blockiert. Dann wird eine weitergehende Zustellbewegung durch den Bremsdrehhebel 9 über den Betätiger 9b auf das Antriebselement 15a zwar auch weiter übertragen, aber eine weitere Übertragung auf den Abtriebsring 16b mittels der Kugelrampenkupplung 15 unterbunden. Dabei bildet die Kugelrampenkupplung 15 eine Überlastkupplung.

Damit die so ausgeführte Nachstellung beim Lösen der Scheibenbremse 1 durch Zurückbewegen bzw. Zurückschwenken des Bremsdrehhebels 9 nicht wieder aufgehoben wird, wirkt nun der Freilauf 16 derart, dass in der Lösebewegung die Rückdrehbewegung des Antriebselementes 15a, in dem hier benutzten Beispiel im Gegenuhrzeigersinn, ausgelöst durch den Betätiger 9b nicht auf den Abtriebsring 16b übertragen wird, wobei das Antriebselement 15a gegenüber dem stillstehenden Abtriebsring 16b eine Relativdrehbewegung zurück im Gegenuhrzeigersinn ausführt.

In dem anderen Fall, in dem (noch) keine Nachstellung der Bremsbeläge 3 erforderlich ist, werden die Gewindestempel 6, 6' durch Anliegen der Bremsbeläge 3 an der Bremsscheibe 2 nach Durchlaufen des konstruktiven Lüftspiels sofort blockiert, und die Überlastkupplung gebildet durch die Kugelrampenkupplung 15 ermöglicht eine Verdrehung des Antriebselementes 15a relativ zu dem Rampenring 15f.

Die Überlastkupplung 16c ist insbesondere bei einem manuellen Rückstellen der Gewindestempel 6, 6' über das Betätigungsende 7b der Mitnehmereinrichtung 11b z.B. im Wartungsfall erforderlich (siehe z.B. Fig. 4, 4a). Dabei wird der Gewindestempel 6' über das Koppelrad 20'a durch den manuell verdrehten Aufsatz 7 verdreht. Diese Drehbewegung wird über das Synchronmittel 20g der Synchroneinrichtung 20 auf das Koppelrad 20a und den damit gekoppelten Gewindestempel 6 übertragen. Gleichzeitig wird aber auch durch die Kopplung der Übertragungselemente 18d zwischen Innenprofil 20d des Koppelrads 20a und dem Abtriebsabschnitt 18c das Abtriebselement 18 der Nachstelleinrichtung 11a entgegen einer Nachstelldrehbewegung (in dem Beispiel im Gegenuhrzeigersinn) verdreht. Da aber das Antriebselement 15a, das mit dem stillstehenden Betätiger 9b in Eingriff steht, somit blockiert ist, erfolgt ein Auslösen der Überlastkupplung 16c und eine Entkopplung der manuellen Rückdrehbewegung der Gewindestempel 6,6' von dem blockierten Antriebselement 15a.

Bei einer lang andauernden Bremsung, z.B. Bergabfahrt, kann es während nur einer Bremsbetätigung zu einem relativ großen Verschleiß von Bremsbelägen 3 kommen. Dadurch kann das aktuelle Lüftspiel der Scheibenbremse 1 so groß werden, dass es bei einer nächsten Bremsung nicht vollständig rückstellbar ist. Bei einer Bremsbetätigung wird üblicherweise etwa 20% Lüftspielreduktion erreicht. Bei einem vorhandenen Lüftspiel von bis zum 2 mm und einem konstruktiven Lüftspiel von 0,8 mm würde nach der folgenden Bremsbetätigung ein Lüftspiel von 1,76 mm verbleiben, obwohl ca. 0,8 mm als Soll-Lüftspiel vorhanden sein sollen. Eine größere Lüftspielreduktion in kürzerer Zeit, d.h. eine hohe Nachstellgeschwindigkeit, kann mit einem Verfahren erreicht werden, das nun im Zusammenhang mit Fig. 1 kurz beschrieben wird.

In einem ersten Verfahrensschritt werden während eines Bremsvorgangs mit der Scheibenbremse 1 beim Zuspannen verschiedene Parameter ermittelt, mittels derer eine Aussage über den aktuellen Verschleiß der Bremsbeläge 3 getroffen werden kann. Dazu zählen zum Beispiel eine Dauer des Bremsvorgangs, die Kraft der Zuspannung (z.B. ein Druck eines Pneumatikzylinders, der den Bremsdrehhebel 9 betätigt), die Umgebungstemperatur, eine aktuelle Temperatur der Scheibenbremse 1 bzw. deren Temperaturanstieg, der zuvor ermittelte oder geschätzte Verschleißwert. Es können auch noch andere Parameter eines Bremssteuergerätes und eines Motorsteuergerätes herangezogen werden, wie beispielsweise die Fahrgeschwindigkeit, tatsächliches Gesamtgewicht des Fahrzeugs usw.

Anhand dieser ermittelten Parameter wird dann mit einem Schätzverfahren, d.h. mit einem entsprechenden Algorithmus, der Verschleiß während dieses Bremsvorgangs ermittelt. Dieses Ermitteln kann in der Steuereinrichtung 100 (siehe Fig. 1) z.B. per Software erfolgen. Es ist natürlich auch möglich, dass eine separate Vorrichtung oder ein Bestandteil eines Bremssteuergerätes dazu benutzt wird.

Der so abgeschätzte Verschleiß entspricht einem aktuell abgeschätzten Lüftspiel der Scheibenbremse. Dieser Schätzwert wird am Ende des Bremsvorgangs bzw. dann, wenn ein Schätzwert vorliegt, mit einem vorher festlegbaren Referenzwert verglichen. Dies erfolgt in einem zweiten Verfahrensschritt.

Wenn der Referenzwert nicht erreicht wird, erfolgt keine weitere Aktion.

Ist der Schätzwert größer oder gleich dem Referenzwert, so wird eine Anzahl von leichten Bremsbetätigungen bestimmt. Dies kann z.B. über gespeicherte Tabellenwerte oder Berechnungen ausgeführt werden.

In einem dritten Verfahrensschritt wird dann die Scheibenbremse 1 anhand der bestimmten Anzahl entsprechend mehrfach leicht betätigt, um die Nachstellung des Verschleißwertes zu erreichen. Diese leichten Bremsbetätigungen erfolgen dabei so, dass z.B. ein Bremsdruck derart gewählt wird, dass der Ansprechdruck der Scheibenbremse 1 gerade erreicht wird. Dadurch wird die Nachstelleinrichtung 11a durch den Betätiger 9b des Bremsdrehhebels 9 betätigt und führt eine Nachstellung aus. Auf diese Weise wird das Soll-Lüftspiel schneller erreicht.

Dabei wird im dritten Verfahrensschritt das Bremssteuergerät von der Steuereinrichtung 100 mit entsprechenden Signalen so gesteuert, dass die leichten Bremsbetätigungen vom Bremssteuergerät eingeleitet werden können. Das kann schon während des Lösevorgangs der Scheibenbremse 1 nach dem betreffenden Bremsvorgang beginnen.

Auf diese Weise kann mit dem Verfahren zum Betreiben der Verschleißnachstellvorrichtung 11 bei der oben beschriebenen Scheibenbremse 1 eine hohe Nachstellgeschwindigkeit, d.h. eine Steigerung der Nachstellgeschwindigkeit bewirkt werden. Dies Verfahren ist aber auch bei anderen Bremsen mit Verschleißnachstellvorrichtungen einsetzbar.

Die Verschleißnachstellvorrichtung 11 ist für die Verschleißnachstellung für pneumatisch zugespannte Scheibenbremsen im Nutzfahrzeugbereich gestaltet, kann jedoch auch bei allen anderen Anwendungen, wo Verschleißausgleich notwendig ist, zum Einsatz kommen.

Die Erfindung wird durch die oben beschriebenen Ausführungsbeispiele nicht eingeschränkt. Sie ist im Rahmen der beigefügten Ansprüche modifizierbar.

So ist es z.B. denkbar, dass anstelle einer Schlingfeder als Kopplungselement 14 eine entsprechende mechanische Freilaufeinrichtung als Zukaufteil eingesetzt wird.

Das Kraftspeicherelement 19 kann aus mehreren, auch unterschiedlichen, Federelementen bestehen.

Für die Synchroneinrichtung 20 wird kein Deckel benötigt. Dadurch können für die Öffnungen für die Nachstelleinrichtung 11a und die Mitnehmereinrichtung 11b im Bremssattel 4 Deckel mit radialen Dichtungen, z.B. O-Ringe, verwendet werden.

Die Traverse 8 kann mit den Gewindestempeln 6, 6' und der Synchroneinrichtung 20 als vormontierte und synchronisierte Einheit (modularisiertes Montagekonzept) ausgeführt werden. Als vormontierte Einheit ist die Traverse 8 dann austauschbar.

Es ist auch denkbar, dass die Nachstelleinrichtung 11a für eine Scheibenbremse 1 mit nur einer Spindeleinheit 5 mit einem Gewindestempel 6 oder natürlich auch mehr als zwei Gewindestempeln 6, 6' eingesetzt werden kann. Bei der Ausführung der Scheibenbremse 1 mit nur einem Gewindestempel 6 kann das Koppelrad 20a ohne Synchronabschnitt 20b ausgeführt sein.

### Bezugszeichenliste

- 1: Scheibenbremse
- 2: Bremsscheibe
- 2a: Bremsscheibenachse
- 3: Bremsbelag
- 3a: Bremsbelagträger
- 4: Bremssattel
- 5,5': Spindeleinheit
- 5a: Nachstellerachse
- 5'a: Mitnehmerachse
- 6,6': Gewindestempel
- 6a, 6'a; 6b, 6'b: Wellenende
- 6c, 6'c: Axialnut
- 6d, 6'd: Gewinde
- 6e, 6'e: Druckstück
- 7: Aufsatz
- 7a: Aufsatzabschnitt
- 7b: Betätigungsende
- 7c: Sensor
- 7d: Einbaugehäuse
- 8: Traverse
- 8a, 8'a, 8b, 8'b: Aufnahme
- 8c: Traversenoberseite
- 9: Bremsdrehhebel
- 9a: Hebelkörper
- 9b: Betätiger
- 9c: Betätigungskontur
- 9d, 9'd: Lagerabschnitt
- 9e: Schwenkachse
- 10: Antrieb
- 11: Verschleißnachstellvorrichtung
- 11a: Nachstelleinrichtung
- 11b: Mitnehmereinrichtung
- 12: Lagerscheibe
- 12a: Deckel
- 13: Tragkörper
- 13a: Lagerabschnitt
- 13b: Schulter
- 13c: Aufnahmeabschnitt
- 13d: Auflageabschnitt
- 14: Kopplungselement
- 15: Kugelrampenkupplung
- 15a: Antriebselement
- 15b: Konturabschnitt
- 15c: Rampenkugel
- 15d: Stützkugel
- 15e: Stützscheibe
- 15f: Rampenring
- 15g: Stützhülse
- 16: Freilauf
- 16a: Freilaufkugel
- 16b: Abtriebsring
- 16c: Überlastkupplung
- 17: Druckelement
- 17a: Kopplungsabschnitt
- 17b: Druckkugel
- 17c: Druckscheibe
- 18: Abtriebselement
- 18a: Abtriebskopplungsabschnitt
- 18b: Schulterabschnitt
- 18c: Abtriebsabschnitt
- 18d: Übertragungselement
- 19: Kraftspeicherelement
- 20: Synchroneinrichtung
- 20a, 20'a: Koppelrad
- 20b, 20'b: Synchronabschnitt
- 20c: Eingriffsabschnitt
- 20d: Innenprofil
- 20e: Einsatzelement
- 20f: Verzahnung
- 20g: Synchronmittel
- 21, 21', 21'a: Sicherungselement
- 22, 22': Lagerbock
- 22a, 22'a: Zentrieransatz
- 22b, 22'b: Schwenklager
- 23: Rückstellfeder
- 24: Axialfeder
- 100: Steuereinrichtung

## Patentansprüche

1. Nachstelleinrichtung (11a) zur Nachstellung eines Reibflächenverschleißes an Bremsbelägen (3) und Bremsscheibe (2) einer Scheibenbremse (1), insbesondere für ein Kraftfahrzeug, mit einer Zuspannvorrichtung, vorzugsweise mit einem Bremsdrehhebel (9), wobei die Nachstelleinrichtung (11a) antriebsseitig mit der Zuspannvorrichtung, vorzugsweise mit dem Bremsdrehhebel (9), und abtriebsseitig mit einer Spindeleinheit (5, 5') der Scheibenbremse (1) koppelbar ist, wobei die Nachstelleinrichtung (11a) umfasst:
a) ein Antriebselement (15a), an dem axial beiderseits jeweils eine Wälzkörperanordnung angeordnet ist, von denen eine als Wälzlager (15d) und eine als Kugelrampenkupplung (15) mit einem Freilauf (16) ausgebildet ist;
b) ein mit der Kugelrampenkupplung (15) gekoppeltes Druckelement (17), welches mit einem Abschnitt der Kugelrampenkupplung (15) eine Überlastkupplung (16c) bildet;
c) ein mit dem Druckelement (17) gekoppeltes Abtriebselement (18) zur Kopplung mit einem Koppelrad (20a), welches für eine Kopplung mit der Spindeleinheit (5, 5') ausgebildet ist;
d) ein Kraftspeicherelement (19) zur Erzeugung einer Vorspannkraft der Kugelrampenkupplung (15) und der Überlastkupplung (16c); Nachstelleinrichtung **gekennzeichnet durch**:
e) einen Tragkörper (13), welcher an einem Ende mit einer Lagerscheibe (12) verbunden ist und um welchen herum axial in Reihe mit der Lagerscheibe (12) das Antriebselement (15a), die Wälzkörperanordnungen (15d, 15, 16), die Überlastkupplung (16c), das Abtriebselement (18) und das Kraftspeicherelement (19) angeordnet sind, wobei das Kraftspeicherelement (19) zwischen einem Auflageabschnitt (13d) des Tragkörpers (13) und dem Druckelement (17) angeordnet ist, und wobei der Tragkörper (13) in Hülsengestalt ausgebildet ist, wobei das Innere des Tragkörpers (13) für eine Aufnahme eines Gewindestempels (6, 6') einer Spindeleinheit (5, 5') der zuzuordnenden Scheibenbremse (1) ausgestaltet ist..

2. Nachstelleinrichtung (11a) nach Anspruch 1, **dadurch gekennzeichnet, dass** der Tragkörper (13) einen Lagerabschnitt (13a) und einen Aufnahmeabschnitt (13c) aufweist, welche über eine Schulter (13b) verbunden sind, wobei der Lagerabschnitt (13a) einen geringeren Außendurchmesser als der Aufnahmeabschnitt (13c) aufweist.

3. Nachstelleinrichtung (11a) nach Anspruch 2, **dadurch gekennzeichnet, dass** ein anderes Ende des Aufnahmeabschnitts (13c) als Auflageabschnitt (13d) für das Kraftspeicherelement (19) ausgebildet ist.

4. Nachstelleinrichtung (11a) nach einem der vorhergehenden Ansprüche, **dadurch gekennzeichnet, dass** das Abtriebselement (18) in Hülsengestalt mit zwei zylindrischen Abschnitten (18a, 18c) ausgebildet ist.

5. Nachstelleinrichtung (11a) nach Anspruch 4, **dadurch gekennzeichnet, dass** die zwei zylindrischen Abschnitte (18a, 18c) des Abtriebselementes (18) unterschiedliche Durchmesser aufweisen und über einen Schulterabschnitt (18b) verbunden sind, wobei der eine zylindrische Abschnitt als Abtriebskopplungsabschnitt (18a) einen größeren Durchmesser aufweist als der andere zylindrische Abschnitt, der als Abtriebsabschnitt (18c) zur Kopplung mit dem Koppelrad (20a) ausgebildet ist.

6. Nachstelleinrichtung (11a) nach Anspruch 5, **dadurch gekennzeichnet, dass** das Kraftspeicherelement (19) zwischen dem Abtriebskopplungsabschnitt (18a) des Abtriebselementes (18) und dem Tragkörper (13) angeordnet ist.

7. Nachstelleinrichtung (11a) nach Anspruch 5 oder 6, **dadurch gekennzeichnet, dass** sich der Abtriebsabschnitt (18c) des Abtriebselementes (18) in einen Innenraum des Koppelrads (20a) erstreckt und mit einem Innenprofil (20d) des Koppelrads (20a) über Übertragungselemente (18d), vorzugsweise Kugeln, in Zusammenwirkung steht.

8. Nachstelleinrichtung (11a) nach Anspruch 7, **dadurch gekennzeichnet, dass** der Abtriebsabschnitt (18c) des Abtriebselementes (18), das Innenprofil (20d) des Koppelrads (20a) und die Übertragungselemente (18d) ein kardanisches Gelenk bilden.

9. Nachstelleinrichtung (11a) nach einem der vorhergehenden Ansprüche, **dadurch gekennzeichnet, dass** das Koppelrad (20a) einen Eingriffsabschnitt (20c) aufweist, der zur drehfesten Zusammenwirkung mit einem Gewindestempel (6, 6') einer Spindeleinheit (5, 5') der zuzuordnenden Scheibenbremse (1) vorgesehen ist.

10. Nachstelleinrichtung (11a) nach Anspruch 9, **dadurch gekennzeichnet, dass** das Koppelrad (20a) einen Synchronabschnitt (20b) aufweist, welcher zur Kopplung mit einem Synchronmittel (20g) einer Synchroneinrichtung (20) der zuzuordnenden Scheibenbremse (1) vorgesehen ist.

11. Nachstelleinrichtung (11a) nach einem der vorhergehenden Ansprüche, **dadurch gekennzeichnet, dass** das Antriebselement (15a) einen Konturabschnitt (15b) aufweist, der zur Zusammenwirkung mit einer Betätigungskontur (9c) eines Betätigers (9b) der Zuspannvorrichtung, vorzugsweise eines Bremsdrehhebels (9) der zuzuordnenden Scheibenbremse (1) ausgebildet ist.

12. Nachstelleinrichtung (11a) nach einem der vorhergehenden Ansprüche, **dadurch gekennzeichnet, dass** ein Rampenring (15f) der Kugelrampenkupplung (15) und das Antriebselement (15a) mittels eines elastischen Kopplungselementes (14), vorzugsweise eine Schlingfeder, gekoppelt sind.

13. Scheibenbremse (1), vorzugsweise druckluftbetätigt, insbesondere für ein Kraftfahrzeug, mit einer Zuspannvorrichtung, vorzugsweise mit einem Bremsdrehhebel (9), mindestens einer Spindeleinheit (5, 5') mit jeweils einem Gewindestempel (6, 6'), und mindestens einer Verschleißnachstellvorrichtung (11), welche mit der Zuspannvorrichtung, vorzugsweise mit dem Bremsdrehhebel (9), gekoppelt ist,
**dadurch gekennzeichnet,**
**dass** die Verschleißnachstellvorrichtung (11) mit einer Nachstelleinrichtung (11a) nach einem der vorhergehenden Ansprüche ausgebildet ist.

14. Scheibenbremse (1) nach Anspruch 13, **dadurch gekennzeichnet, dass** die Nachstelleinrichtung (11a) der Verschleißnachstellvorrichtung (11) auf den Gewindestempel (6) der mindestens einen Spindeleinheit (5) der Scheibenbremse (1) aufgesetzt ist und den Gewindestempel (6) mindestens teilweise umschließt.

15. Scheibenbremse (1) nach Anspruch 14, **dadurch gekennzeichnet, dass** die Nachstelleinrichtung (11a) bei neuen Bremsbelägen (3) den Gewindestempel (6) mindestens zu zwei Drittel der axialen Länge des Gewindestempels (6) umschließt.

16. Scheibenbremse (1) nach Anspruch 14 oder 15, weiterhin aufweisend mindestens zwei Spindeleinheiten (5, 5') mit jeweils einem Gewindestempel (6, 6'), wobei die Gewindestempel (6, 6') in einer Traverse (8) eingeschraubt sind, wobei die Traverse (8) mit der Zuspannvorrichtung, vorzugsweise mit dem Bremsdrehhebel (9), zusammenwirkt, und eine Synchroneinrichtung (20), **dadurch gekennzeichnet, dass** die Verschleißnachstellvorrichtung (11) weiterhin eine Mitnehmereinheit (11b) aufweist, welche mit dem Gewindestempel (6') der anderen Spindeleinheit (5') der beiden Spindeleinheiten (5, 5') der Scheibenbremse (1) gekoppelt ist.

17. Scheibenbremse (1) nach Anspruch 16, **dadurch gekennzeichnet, dass** die Synchroneinrichtung (20) auf der Traverse (8) angeordnet ist.

18. Scheibenbremse (1) nach Anspruch 17, **dadurch gekennzeichnet, dass** die Synchroneinrichtung (20) Koppelräder (20a, 20'a), von denen jeweils eins mit dem jeweiligen Gewindestempel (6, 6') einer der mindestens zwei Spindeleinheiten (5, 5') drehfest gekoppelt ist, und ein Synchronmittel (20g) umfasst, wobei jedes Koppelrad (20a, 20'a) einen Synchronabschnitt (20b, 20'b) zur Zusammenwirkung mit dem Synchronmittel (20g) aufweist.

19. Scheibenbremse (1) nach Anspruch 18, **dadurch gekennzeichnet, dass** das Synchronmittel (20g) ein Zugmittel ist.

20. Scheibenbremse (1) nach Anspruch 19, **dadurch gekennzeichnet, dass** das Synchronmittel (20g) als Kette ausgebildet ist, und dass die Synchronabschnitte (20b, 20'b) der Koppelräder (20a, 20'a) Kettenradverzahnungen sind.

21. Scheibenbremse (1) nach Anspruch 20, **dadurch gekennzeichnet, dass** die Koppelräder (20a, 20'a) der Synchroneinrichtung (20) an der Traverse (8) ortsfest und drehbar angeordnet sind.

22. Scheibenbremse (1) nach einem der Ansprüche 17 bis 21, **dadurch gekennzeichnet, dass** die Traverse (8) mit den Gewindestempeln (6, 6') und der Synchroneinrichtung (20) als vormontierte Funktionsbaugruppe ausgeführt ist.

23. Scheibenbremse (1) nach einem der Ansprüche 16 bis 22, **dadurch gekennzeichnet, dass** die Gewindestempel (6, 6') der Spindeleinheiten (5, 5') in gleicher Weise und Bauart ausgestaltet sind.

24. Scheibenbremse (1) nach Anspruch 23, **dadurch gekennzeichnet, dass** das Koppelrad (20'a) der Spindeleinheit (5') mit der Mitnehmereinheit (11b) mit einem Ende eines Aufsatzes (7) gekoppelt ist, der den zugehörigen Gewindestempel (6') teilweise hülsenartig umschließt, wobei ein anderes Ende des Aufsatzes (7) ein Betätigungsende zur manuellen Betätigung aufweist.

25. Scheibenbremse (1) nach einem der Ansprüche 13 bis 24, **dadurch gekennzeichnet, dass** ein reaktionsseitiger Bremsbelag (3) größer ausgebildet ist als ein zuspannseitiger Bremsbelag (3).

## Claims

1. An adjusting device (11a) for friction surface wear adjustment on brake linings (3) and a brake disc (2) of a disc brake (1), especially for a motor vehicle, having an application device, preferably with a pivoted brake lever (9), it being possible to couple the adjusting device (11a) to the application device, preferably to the pivoted brake lever (9), on the drive side and to a spindle unit (5, 5') of the disc brake (1) on the output side, the adjusting device (11a) comprising:
a) a drive element (15a), on either side of which axially a rolling element assembly is arranged, one such roller element assembly being designed as a rolling bearing (15d) and the other as a ball ramp clutch (15) with a freewheel (16);
b) a pressure element (17) that is coupled to the ball ramp clutch (15) and forms an overload clutch (16c) together with a portion of the ball ramp clutch (15);
c) an output element (18) that is coupled to the pressure element (17) to couple it to a coupling wheel (20a), which is designed for coupling to the spindle unit (5, 5');
d) an energy storage element (19) for generating a preloading force of the ball ramp clutch (15) and of the overload clutch (16c);
this adjusting device being **characterised in that**
e) a support body (13), one end of which is connected to a bearing plate (12) and around which the drive element (15a), the rolling element assemblies (15d, 15, 16), the overload clutch (16c), the output element (18) and the energy storage element (19) are arranged axially in series with the bearing plate (12), the energy storage element (19) being arranged between a supporting portion (13d) of the support body (13) and the pressure element (17), and the support body (13) taking the form of a sleeve, the interior of the support body (13) being designed to receive a threaded plunger (6, 6') of a spindle unit (5, 5') of the corresponding disc brake (1).

2. An adjusting device (11a) according to claim 1, **characterised in that** the support body (13) has a bearing portion (13a) and a receiving portion (13c) that are connected by a shoulder (13b), the bearing portion (13a) having a smaller outside diameter than the receiving portion (13c).

3. An adjusting device (11a) according to claim 2, **characterised in that** another end of the receiving portion (13c) is designed as a supporting portion (13d) for the energy storage element (19).

4. An adjusting device (11a) according to any one of the preceding claims, **characterised in that** the output element (18) takes the form of a sleeve with two cylindrical portions (18a, 18c).

5. An adjusting device (11a) according to claim 4, **characterised in that** the two cylindrical portions (18a, 18c) of the output element (18) have different diameters and are connected by a shoulder portion (18b), one cylindrical portion, being an output coupling portion (18a), having a larger diameter than the other cylindrical portion, which is designed as an output portion (18c) for coupling to the coupling wheel (20a).

6. An adjusting device (11a) according to claim 5, **characterised in that** the energy storage element (19) is arranged between the output coupling portion (18a) of the output element (18) and the support body (13).

7. An adjusting device (11a) according to claim 5 or 6, **characterised in that** the output portion (18c) of the output element (18) extends into an interior space of the coupling wheel (20a) and interacts with an internal profile (20d) of the coupling wheel (20a) via transmission elements (18d), preferably balls.

8. An adjusting device (11a) according to claim 7, **characterised in that** the output portion (18c) of the output element (18), the internal profile (20d) of the coupling wheel (20a) and the transmission elements (18d) form a Cardan joint.

9. An adjusting device (11a) according to any one of the preceding claims, **characterised in that** the coupling wheel (20a) has an engagement portion (20c) that is provided for conjoint rotational interaction with a threaded plunger (6, 6') of a spindle unit (5, 5') of the corresponding disc brake (1).

10. An adjusting device (11a) according to claim 9, **characterised in that** the coupling wheel (20a) has a synchronizing portion (20b), which is provided for coupling to a synchronising means (20g) of a synchronizing device (20) of the corresponding disc brake (1).

11. An adjusting device (11a) according to any one of the preceding claims, **characterised in that** the drive element (15a) has a contoured portion (15b) that is designed to interact with an actuating contour (9c) of an actuator (9b) of the application device, preferably of a pivoted brake lever (9) of the corresponding disc brake (1).

12. An adjusting device (11a) according to any one of the preceding claims, **characterised in that** a ramp ring (15f) of the ball ramp clutch (15) and the drive element (15a) are coupled by means of an elastic coupling element (14), preferably a torsion spring.

13. A disc brake (1), preferably air-operated, in particular for a motor vehicle, having an application device, preferably with a pivoted brake lever (9), at least one spindle unit (5, 5') having a threaded plunger (6, 6'), and at least one wear adjustment device (11) that is coupled to the application device, preferably to the pivoted brake lever (9),
**characterised in that**
the wear adjustment device (11) is constructed with an adjusting device (11a) according to any one of the preceding claims.

14. A disc brake (1) according to claim 13, **characterised in that** the adjusting device (11a) of the wear adjustment device (11) is mounted on the threaded plunger (6) of the at least one spindle unit (5) of the disc brake (1) and at least partially surrounds the threaded plunger (6).

15. A disc brake (1) according to claim 14, **characterised in that** when the brake linings (3) are new the adjusting device (11a) surrounds the threaded plunger (6) over at least two thirds of the axial length of the threaded plunger (6).

16. A disc brake (1) according to claim 14 or 15, further having at least two spindle units (5, 5'), each having a threaded plunger (6, 6'), the threaded plungers (6, 6') being screwed into a crossmember (8), the crossmember (8) interacting with the application device, preferably with the pivoted brake lever (9),
and a synchronizing device (20), **characterised in that** the wear adjustment device (11) also has a driver unit (11b) that is coupled to the threaded spindle (6') of the other spindle unit (5') of the two spindle units (5, 5') of the disc brake (1).

17. A disc brake (1) according to claim 16, **characterised in that** the synchronizing device (20) is arranged on the crossmember (8).

18. A disc brake (1) according to claim 17, **characterised in that** the synchronizing device (20) comprises coupling wheels (20a, 20'a), one of which is coupled rotationally conjointly to the corresponding threaded plunger (6, 6') of one of the at least two spindle units (5, 5'), and a synchronizing means (20g), each coupling wheel (20a, 20'a) having a synchronizing portion (20b, 20'b) for interaction with the synchronizing means (20g).

19. A disc brake (1) according to claim 18, **characterised in that** the synchronizing means (20g) is a traction means.

20. A disc brake (1) according to claim 19, **characterised in that** the synchronizing means (20g) is designed as a chain and that the synchronizing portions (20b, 20'b) of the coupling wheels (20a, 20'a) are chain sprocket teeth.

21. A disc brake (1) according to claim 20, **characterised in that** the coupling wheels (20a, 20'a) of the synchronizing device (20) are arranged in a fixed location and rotatably on the crossmember (8).

22. A disc brake (1) according to any one of claims 17 to 21, **characterised in that** the crossmember (8), together with the threaded plungers (6, 6') and the synchronizing device (20), takes the form of a preassembled functional module.

23. A disc brake (1) according to any one of claims 16 to 22, **characterised in that** the threaded plungers (6, 6') of the spindle units (5, 5') are of the same design and construction.

24. A disc brake (1) according to claim 23, **characterised in that** the coupling wheel (20'a) of the spindle unit (5') is coupled to the driver unit (11b) by means of one end of an attachment (7) that surrounds the associated threaded plunger (6') partially in the manner of a sleeve, another end of the attachment (7) having an actuating end for manual actuation.

25. A disc brake (1) according to any one of claims 13 to 24, **characterised in that** a reaction-side brake lining (3) is of larger design than an application-side brake lining (3).

## Revendications

1. Dispositif (11a) de rattrapage de jeu pour le rattrapage d'une usure de surface de frottement sur des garnitures (3) et un disque (2) d'un frein (1) à disque, notamment pour un véhicule automobile, comprenant un système de serrage ayant, de préférence, un levier (9) tournant de frein, le dispositif (11a) de rattrapage de jeu pouvant être couplé du côté menant au système de serrage, de préférence par le levier (9) tournant de frein, et du côté mené à une unité (5, 5') 0 broche du frein (1) à disque, le dispositif (11a) de rattrapage de jeu comprenant :
a) un élément (15a) menant, sur lequel est disposé, des deux côtés axialement, respectivement, un agencement de corps de roulement, dont l'un est constitué en palier (15d) de roulement et l'un en accouplement (15) à rampe à billes ayant une roue libre (16) ;
b) un élément (17) d'application d'une pression couplé à l'accouplement (15) à rampe à billes et formant, avec une partie de l'accouplement (15) à rampe à billes, un accouplement (16c) à surcharge ;
c) un élément (18) mené, couplé à l'élément (17) d'application d'une pression, pour s'accoupler à une roue (20a) d'accouplement, laquelle est constituée pour un accouplement avec l'unité (5, 5') à broche ;
d) un élément (19) d'accumulation de force pour produire une force de précontrainte de l'accouplement (15) à rampe à billes et de l'accouplement (16c) de surcharge ; dispositif de rattrapage de jeu **caractérisé par** :
e) un corps (13) de support, qui est relié à une extrémité à un disque (12) de palier et autour duquel sont disposés axialement en succession, avec le disque (12) de palier, l'élément (15a) menant, les agencements (15d, 15, 16) de corps de roulement, l'accouplement (16c) de surcharge, l'élément (18) mené et l'élément (19) d'accumulation de force, l'élément (19) d'accumulation de force étant disposé entre une partie (13d) d'appui du corps (13) de support et l'élément (17) d'application d'une pression et le corps (13) de support étant constitué sous la forme d'une douille, l'intérieur du corps (13) de support étant conformé pour la réception d'un poinçon (6, 6') fileté d'une unité (5, 5') à broche, du frein (1) à disque à associer.

2. Dispositif (11a) de rattrapage de jeu suivant la revendication 1, **caractérisé en ce que** le corps (13) de support a une partie (13a) de palier et une partie (13c) de réception, qui sont reliées par un épaulement (13b), la partie (13a) de palier ayant un diamètre extérieur plus petit que la partie (13c) de réception.

3. Dispositif (11a) de rattrapage de jeu suivant la revendication 2, **caractérisé en ce que** l'autre extrémité de la partie (13c) de réception est constituée sous la forme d'une partie (13b) d'appui de l'élément (19) d'accumulation de force.

4. Dispositif (11a) de rattrapage de jeu suivant l'une des revendications précédentes, **caractérisé en ce que** le l'élément (18) mené est constitué sous la forme d'un manchon ayant deux parties (18a, 18c) cylindriques.

5. Dispositif (11a) de rattrapage de jeu suivant la revendication 4, **caractérisé en ce que** les parties (18a, 18c) cylindriques de l'élément (18) mené ont des diamètres différents et sont reliées par une partie (18b) d'épaulement, l'une des parties cylindriques ayant comme partie (18a) d'accouplement menée un diamètres plus grand que l'autre partie cylindrique constituée en partie (18c) menée pour l'accouplement à la roue (20a) d'accouplement.

6. Dispositif (11a) de rattrapage de jeu suivant la revendication 5, **caractérisé en ce que** l'élément (19) d'accumulation de force est disposé entre la partie (18a) d'accouplement menée de l'élément (18) mené et le corps (13) de support.

7. Dispositif (11a) de rattrapage de jeu suivant la revendication 5 ou 6, **caractérisé en ce que** la partie (18c) menée de l'élément (18) mené s'étend dans un espace intérieur de la roue (20a) d'accouplement et est en coopération avec un profil (20d) intérieur de la roue (20a) d'accouplement par l'intermédiaire d'éléments (18d) de transmission, de préférence par l'intermédiaire de billes.

8. Dispositif (11a) de rattrapage de jeu suivant la revendication 7, **caractérisé en ce que** la partie (18c) menée de l'élément (18) mené forme le profil (20d) intérieur de la roue (20a) d'accouplement et les éléments (18d) de transmission une articulation à la cardan.

9. Dispositif (11a) de rattrapage de jeu suivant l'une des revendications précédentes, **caractérisé en ce que** la roue (20a) d'accouplement a une partie (20c) de pénétration, prévue pour coopérer d'une manière solidaire en rotation avec un poinçon (6, 6') fileté de l'unité (5, 5') à broche du frein (1) à disque à associer.

10. Dispositif (11a) de rattrapage de jeu suivant la revendication 9, **caractérisé en ce que** la roue (20a) d'accouplement a une partie (20b) de synchronisation, qui est prévue pour s'accoupler à un moyen (20g) du dispositif (20) de synchronisation du frein (1) à disque à associer.

11. Dispositif (11a) de rattrapage de jeu suivant l'une des revendications précédentes, **caractérisé en ce que** l'élément (15a) menant a une partie (15b) de contour, qui est constituée pour coopérer avec un contour (9c) d'actionnement d'un actionneur (9b) du système de serrage, de préférence d'un levier (9) tournant de frein du frein (1) à disque à associer.

12. Dispositif (11a) de rattrapage de jeu suivant l'une des revendication précédentes, **caractérisé en ce qu'**une bague (15f) de rampe de l'accouplement (15) à rampe à billes et l'élément (15a) menant sont accouplés au moyen d'un élément (14) d'accouplement élastique, de préférence au moyen d'un ressort à boucle.

13. Frein (1) à disque, de préférence à actionnement par l'air comprimé, notamment d'un véhicule automobile, comprenant un système de serrage, ayant de préférence un levier (9) tournant de frein, au moins une unité (5, 5') à broche, ayant chacune un poinçon (6, 6') fileté, et au moins un système (11) de rattrapage de l'usure, qui est couplé au système de serrage, de préférence par le levier (9) tournant de frein,
**caractérisé**
**en ce que** le système (1) de rattrapage d'usure est constitué par un dispositif (11a) de rattrapage de jeu suivant l'une des revendications précédentes.

14. Frein (1) à disque suivant la revendication 13, **caractérisé en ce que** le dispositif (11a) de rattrapage de jeu du système (11) de rattrapage d'usure est mis sur le poinçon (6) fileté de la au moins une unité (5) à broche du frein (1) à disque et entoure, au moins en partie, le poinçon (6) fileté.

15. Frein (1) à disque suivant la revendication 14, **caractérisé en ce que** le dispositif (11a) de rattrapage entoure, pour de nouvelles garnitures (3) de frein, le poinçon (6) fileté, au moins sur les deux tiers de la longueur axiale du poinçon (6) fileté.

16. Frein (1) à disque suivant la revendication 14 ou 15, comprenant, en outre, au moins deux unités (5, 5') à broche, ayant chacune un poinçon (6, 6') fileté, le poinçon (6, 6') fileté étant fixé dans une traverse (8), la traverse (8) coopérant avec le système de serrage, de préférence avec le levier (9) tournant de frein, et un dispositif (20) de synchronisation, **caractérisé en ce que** le système (11) de rattrapage d'usure a, en outre, une unité (11b) d'entraîneur, qui est couplée au poinçon (6') fileté de l'autre unité (5') à broche des deux unités (5, 5') à broche du frein (1) à disque.

17. Frein (1) à disque suivant la revendication 7, **caractérisé en ce que** le dispositif (20) de synchronisation est monté sur la traverse (8).

18. Frein (1) à disque suivant la revendication (17), **caractérisé en ce que** le dispositif (20) de synchronisation comprend des roues (20a, 20'a) d'accouplement, dont l'une est solidaire en rotation du poinçon (6, 6') fileté respectif de l'une des au moins deux unités (5, 5') à broche, et un moyen (20g) de synchronisation, chaque roue (20a, 20'a) d'accouplement ayant une partie (20b, 20'b) de synchronisation pour coopérer avec le moyen (20g) de synchronisation.

19. Frein (1) à disque suivant la revendication 18, **caractérisé en ce que** le moyen (20g) de synchronisation est un moyen de traction.

20. Frein (1) à disque suivant la revendication 19, **caractérisé en ce que** le moyen (20g) de synchronisation est constitué sous la forme d'une chaîne et **en ce que** les parties (20b, 20'b) de synchronisation des roues (20a, 20'a) d'accouplement sont des dentures de roue à chaîne.

21. Frein (1) à disque suivant la revendication 20, **caractérisé en ce que** les roues (20a, 20'a) d'accouplement du dispositif (20) de synchronisation sont montées à poste fixe et tournantes sur la traverse (8).

22. Frein (1) à disque suivant l'une des revendication 17 à 21, **caractérisé en ce que** la traverse (8) est réalisée, en ayant les poinçons (6, 6') filetés et le dispositif (20) de synchronisation, sous la forme d'un module fonctionnel prémonté.

23. Frein (1) à disque suivant l'une des revendications 16 à 22, **caractérisé en ce que** les poinçons (6, 6') filetés des unités (5, 5') à broche sont constitués de la même façon et en étant de même type de construction.

24. Frein (1) à disque suivant la revendication 23, **caractérisé en ce que** la roue (20'a) d'accouplement de l'unité (5') à broche est accouplée à l'unité (11b) d'entraîneur par une extrémité d'une coiffe (7), qui entoure, au moins en partie, à la manière d'une douille, le poinçon (6') associé, tandis qu'une autre extrémité de la coiffe (7) a une extrémité d'actionnement pour l'actionnement manuel.

25. Frein (1) à disque suivant l'une des revendications 13 à 14, **caractérisé en ce qu'**une garniture (3) de frein du côté de la réaction est plus grande qu'une garniture (3) de frein du côté du serrage.
